# EUROPEAN PATENT APPLICATION

(11) **EP 4 753 277 A1**
(43) Date of publication of application: **03.06.2026**
(21) Application number: 23962006.5
(22) Date of filing: 22.12.2023
(51) Int. Cl.: H04N 23/70, H04M 1/72454

(54) **METHOD FOR ADJUSTING BRIGHTNESS OF DISPLAY SCREEN, ELECTRONIC DEVICE, STORAGE MEDIUM, AND PROGRAM PRODUCT**

(71) Applicant: Honor Device Co., Ltd., Shenzhen, Guangdong 518040 (CN)
(72) Inventor: ZHOU, Bokai, Shenzhen, Guangdong 518040 (CN); YU, Feng, Shenzhen, Guangdong 518040 (CN); WANG, Guoying, Shenzhen, Guangdong 518040 (CN)
(74) Representative: Isarpatent
(86) International application number: PCT/CN2023/141226
(87) International publication number: WO 2025/129684

(57) **Abstract**

This application discloses a display luminance adjustment method, an electronic device, a storage medium, and a program product, and pertains to the field of electronic device technologies. The method includes: An electronic device powers on a target camera after a screen is turned on; the electronic device detects ambient light luminance by using the target camera; the electronic device adjusts display luminance based on the ambient light luminance detected by the target camera, where in a process in which the electronic device adjusts the display luminance, the target camera does not capture an image, and a camera application is not started; the electronic device starts the camera application in response to an operation of a user; and after the camera application is started, the electronic device captures an image by using the target camera, and displays an interface of the camera application, where the interface of the camera application includes the image captured by the target camera. In this application, no ambient light detection component needs to be configured, and the ambient light luminance is detected based on the target camera, so that costs of the electronic device are reduced. In addition, no image is captured, so that power consumption of the target camera is reduced, and performance of the electronic device is improved.

## Description

### TECHNICAL FIELD

This application relates to the field of electronic device technologies, and in particular, to a display luminance adjustment method, an electronic device, a storage medium, and a program product.

### BACKGROUND

Currently, displays of various electronic devices such as a smartphone, a tablet computer, a desktop computer, and a wearable device have an automatic luminance adjustment function. The automatic luminance adjustment function can automatically adjust luminance of the display based on ambient light luminance, to adapt to light intensity in different environments, thereby improving user experience and reducing power consumption of the electronic device.

In a related technology, an ambient light detection component is usually configured on an electronic device. After a screen of the electronic device is turned on, ambient light luminance is detected by using the ambient light detection component, and then display luminance of the electronic device is adjusted based on the detected ambient light luminance.

However, in this method, the ambient light detection component needs to be additionally configured, increasing costs of the electronic device.

### SUMMARY

To resolve a problem of a related technology, embodiments of this application provide a display luminance adjustment method, an electronic device, a storage medium, and a program product. In the method, no ambient light detection component needs to be additionally configured, and ambient light luminance is detected by using a target camera, thereby reducing costs of an electronic device. The technical solutions are as follows:

According to a first aspect, a display luminance adjustment method is provided. The method includes:
powering on, by an electronic device, a target camera after a screen is turned on;
detecting, by the electronic device, ambient light luminance by using the target camera;
adjusting, by the electronic device, display luminance based on the ambient light luminance detected by the target camera, where in a process in which the electronic device adjusts the display luminance, the target camera does not capture an image, and a camera application is not started;
starting, by the electronic device, the camera application in response to an operation of a user; and
after the camera application is started, capturing, by the electronic device, an image by using the target camera, and displaying an interface of the camera application, where the interface of the camera application includes the image captured by the target camera.

In a first possible implementation of the first aspect, the powering on, by an electronic device, a target camera after a screen is turned on includes:
powering on the target camera based on screen-on of the electronic device, to initialize the target camera.

In a second possible implementation of the first aspect, the capturing, by the electronic device, an image by using the target camera includes:
based on the camera application being started, powering off, by the electronic device, the target camera, and then powering on the target camera; and
obtaining, by the electronic device, the image captured by the target camera.

In a third possible implementation of the first aspect, the method further includes:
skipping adjusting, by the electronic device, the display luminance after the camera application is started.

In a third possible implementation of the first aspect, before the powering on, by an electronic device, a target camera after a screen is turned on, the method further includes:
starting, by the electronic device, a face unlock application after the screen is turned on;
after the face unlock application is started, capturing, by the electronic device, an image by using the target camera, where after the display is unlocked, the face unlock application is closed; and
powering off, by the electronic device, the target camera after the face application is closed.

In a fourth possible implementation of the first aspect, the method further includes:
closing, by the electronic device, the camera application in response to an operation of the user;
detecting, by the electronic device, ambient light luminance by using the target camera after the camera application is closed; and
adjusting, by the electronic device, the display luminance based on the ambient light luminance detected by the target camera, where in a process in which the electronic device adjusts the display luminance, the target camera does not capture an image.

In a fifth possible implementation of the first aspect, the detecting, by the electronic device, ambient light luminance by using the target camera includes:
based on the camera application being closed, powering off, by the electronic device, the target camera, and then powering on the target camera; and
obtaining, by the electronic device, the ambient light luminance detected by the target camera.

In a sixth possible implementation of the first aspect, a software system of the electronic device includes a framework layer, a hardware abstraction layer, and a kernel layer, the framework layer includes a camera service module and a sensor service module, the hardware abstraction layer includes a camera control module and a sensor control module, the kernel layer includes a camera driver, and the powering on, by an electronic device, a target camera after a screen is turned on includes:
sending, by the sensor service module, a luminance monitoring instruction to the sensor control module based on screen-on of the electronic device;
after receiving the luminance monitoring instruction, invoking, by the sensor control module, a first interface based on an AIDL service, and then invoking a second interface based on an HIDL (HAL interface definition language, hardware abstraction layer interface definition language) service, to send a first instruction to the camera service module, where the first instruction includes a first identifier, and the first identifier corresponds to an ambient light detection function of the target camera; and
after receiving the first instruction, invoking, by the camera service module, a first function in the camera control module, and executing the first function based on the first identifier, to control the camera driver to power on the target camera, initialize a camera register, and create a read thread for ambient light luminance.

In a seventh possible implementation of the first aspect, before the invoking, by the camera service module, a first function in the camera control module, the method further includes:
after receiving the first instruction, querying, by the camera service module, a camera list, where the camera list is used to store an identifier of an enabled camera; and
when determining that the camera list is empty, invoking, by the camera service module, a first function in the camera control module.

A meaning of enabling in the embodiments of this application may be being started and working normally.

In an eighth possible implementation of the first aspect, after the invoking, by the camera service module, a first function in the camera control module, the method further includes:
storing, by the camera service module, the first identifier into the camera list.

In a ninth possible implementation of the first aspect, the invoking, by the camera service module, a first function in the camera control module, and executing the first function based on the first identifier includes:
invoking, by the camera service module, a first subfunction in the first function to determine whether the target camera supports the ambient light detection function corresponding to the first identifier; and
when determining that the target camera supports the ambient light detection function corresponding to the first identifier, invoking a second subfunction in the first function, and controlling, by executing the second subfunction, the camera driver to power on the target camera, initialize a camera register, and create a read thread for ambient light luminance, and not to configure an image output resource for the target camera.

In a tenth possible implementation of the first aspect, before the detecting, by the electronic device, ambient light luminance by using the target camera, the method further includes:
obtaining, by the camera control module, a target quantity of times from the camera register after the target camera is powered on, where the target quantity of times is used to represent a quantity of times that the electronic device reads, after the screen is turned on, the ambient light luminance detected by the target camera; and
when the target quantity of times is 0, writing, by the camera control module, a first frequency into the camera register, and controlling the target camera to detect the ambient light luminance based on the first frequency; or
when the target quantity of times is greater than 0, writing, by the camera control module, a second frequency into the camera register, and controlling the target camera to detect the ambient light luminance based on the second frequency, where the first frequency is greater than the second frequency.

In an eleventh possible implementation of the first aspect, the adjusting, by the electronic device, display luminance based on the ambient light luminance detected by the target camera includes:
obtaining, by the camera control module, first ambient light luminance output by the target camera, and sending second ambient light luminance to the sensor control module by using a data callback function, where the second ambient light luminance is generated based on the first ambient light luminance;
sending, by the sensor control module, the second ambient light luminance to the sensor service module; and
adjusting, by the sensor service module, the display luminance of the electronic device based on the second ambient light luminance.

The first ambient light luminance and the second ambient light luminance each are not one luminance value, but are a type of luminance values. The first ambient light luminance is ambient light luminance output by a front-facing camera at different moments, and the second ambient light luminance is ambient light luminance sent by the camera control module to the sensor control module at different moments.

In a twelfth possible implementation of the first aspect, before the obtaining, by the camera control module, first ambient light luminance output by the target camera, and sending second ambient light luminance to the sensor control module by using a data callback function, the method further includes:
based on power-on of the electronic device, after receiving the luminance monitoring instruction, invoking, by the sensor control module, the first interface, to register the data callback function in the camera control module.

In a thirteenth possible implementation of the first aspect, before the invoking, by the sensor control module, the first interface, to register the data callback function in the camera control module, the method further includes:
initializing, by the camera control module, the AIDL service based on power-on of the electronic device.

In a fourteenth possible implementation of the first aspect, the method further includes:
after the screen of the electronic device is turned off, invoking, by the sensor control module, a third interface based on the AIDL service, and then invoking the second interface, to send a second instruction to the camera service module, where the second instruction includes the first identifier; and
after receiving the second instruction, invoking, by the camera service module, a second function in the camera control module, and executing the second function based on the first identifier, to control the camera driver to disable the read thread, and power off the target camera.

In a fifteenth possible implementation of the first aspect, the method further includes:
in a process in which the electronic device adjusts the display luminance, sending, by the camera control module, a first death notification message to the sensor control module when monitoring, by using a first death monitoring object, that the camera control module has no response; and
after receiving the first death notification message, invoking, by the sensor control module, the first interface, and then invoking the second interface, to send the first instruction to the camera service module, to enable the ambient light detection function of the target camera.

That the camera control module has no response may be that after the ambient light detection function is enabled, the camera control module does not respond to an operation of sending ambient light luminance detected by the front-facing camera to the sensor control module.

In a sixteenth possible implementation of the first aspect, before the invoking, by the sensor control module, the first interface, and then invoking the second interface, to send the first instruction to the camera service module, the method further includes:
determining, by the sensor control module, whether the AIDL service is started; and
when determining that the AIDL service is started, performing, by the sensor control module, the operation of invoking the first interface and then invoking the second interface to send a third instruction to the camera service module.

In a seventeenth possible implementation of the first aspect, the method further includes:
after the screen of the electronic device is turned off, sending, by the camera control module, a second death notification message to the sensor control module when monitoring, by using a first death monitoring object, that the camera control module has no response;
after receiving the second death notification message, invoking, by the sensor control module, the first interface, to send an initialization instruction to the camera control module; and
after receiving the initialization instruction, initializing, by the camera control module, the target camera and a data callback function, where the data callback function is used to send the ambient light luminance detected by the target camera to the sensor control module.

That the camera control module has no response may be that after the screen of the electronic device is turned off, the camera control module does not respond to an operation of disabling the ambient light detection function.

In an eighteenth possible implementation of the first aspect, before the invoking, by the sensor control module, the first interface, to send an initialization instruction to the camera control module, the method further includes:
determining, by the sensor control module, whether the screen of the electronic device is turned off; and
when determining that the screen of the electronic device is turned off, performing, by the sensor control module, an operation of invoking the first interface to send the initialization instruction to the camera control module.

In a nineteenth possible implementation of the first aspect, the method further includes:
after the screen of the electronic device is turned on, sending, by the sensor control module, a third death notification message to the camera control module when monitoring, by using a second death monitoring object, that the sensor control module has no response;
after receiving the third death notification message, disabling, by the camera control module, the read thread, and destructing a data callback function, where the data callback function is used to send the ambient light luminance detected by the target camera to the sensor control module;
invoking, by the sensor control module, a third interface based on the AIDL service, and then invoking the second interface, to send a second instruction to the camera service module, where the second instruction includes the first identifier;
after receiving the second instruction, invoking, by the camera service module, a second function in the camera control module, and executing the second function based on the first identifier, to control the camera driver to disable the read thread, and power off the target camera; and
after the sensor control module is restarted, invoking, by the sensor control module, the first interface to register the data callback function in the camera control module, and invoking the second interface to send the first instruction to the camera service module, to enable the ambient light detection function of the target camera.

That the sensor control module has no response may be that after the screen of the electronic device is turned on, the camera control module does not respond to an operation of enabling the ambient light detection function of the front-facing camera.

In a twentieth possible implementation of the first aspect, a software system of the electronic device includes a framework layer, a hardware abstraction layer, and a kernel layer, the framework layer includes a camera service module and a sensor service module, the hardware abstraction layer includes a camera control module and a sensor control module, the kernel layer includes a camera driver, and the powering off, by the electronic device, the target camera, and then powering on the target camera, based on the camera application being started includes:
receiving, by the camera service module, a third instruction based on the camera application being started, where the third instruction includes a second identifier and a second package name, the second identifier corresponds to a photographing function of the target camera, and the second package name is a package name of the camera application;
determining, by the camera service module, that a first identifier exists, and determining priorities of the first identifier and the second identifier based on a first package name and the second package name, where the first identifier corresponds to an ambient light detection function of the target camera, and the first package name is a package name of an ambient light detection application; and
determining, by the camera service module, that the priority of the first identifier is lower than the priority of the second identifier, controlling the camera driver to power off the target camera to disable the ambient light detection function of the target camera, and then controlling the camera driver to power on the target camera to enable the photographing function of the target camera.

According to a second aspect, an electronic device is provided, including a processor and a memory. The memory stores at least one piece of program code; and the at least one piece of program code is invoked and executed by the processor, to implement the display luminance adjustment method according to the first aspect.

According to a third aspect, a computer-readable storage medium is provided. The computer-readable storage medium stores at least one computer program, and the at least one computer program can implement the display luminance adjustment method according to the first aspect when being executed by a processor.

According to a fourth aspect, a computer program product is provided. The computer program product includes a computer program, and the computer program can implement the display luminance adjustment method according to the first aspect when being executed by a processor.

The technical solutions provided in the embodiments of this application bring the following beneficial effects:
In this application, the target camera has an image capture function and an ambient light detection function, so that the target camera can be used as an ambient light detection component. After the screen of the electronic device is turned on, the target camera is powered on, and the ambient light luminance is detected by using the target camera, so that the display luminance is adjusted based on the detected ambient light luminance. Therefore, no additional ambient light detection component needs to be configured, that is, automatic adjustment of the display luminance is implemented, and costs of the electronic device are reduced. In addition, in a process of adjusting the display luminance, the target camera only detects the ambient light luminance, does not capture an image, and does not output an image, thereby greatly reducing power consumption of the target camera, saving power, and improving performance of the electronic device.

Further, in the process of adjusting the display luminance, the camera application is not started. After the camera application is started based on an operation of the user, the electronic device captures an image by using the target camera, and displays the image in an interface of the camera application, thereby meeting a photographing requirement of the user.

### BRIEF DESCRIPTION OF DRAWINGS

FIG. 1 is a schematic diagram of a structure of an electronic device according to an embodiment of this application;
FIG. 2 is a block diagram of a software structure of an electronic device according to an embodiment of this application;
FIG. 3 is a flowchart of a display luminance adjustment method according to an embodiment of this application;
FIG. 4 is a flowchart of another display luminance adjustment method according to an embodiment of this application;
FIG. 5 is a flowchart of another display luminance adjustment method according to an embodiment of this application;
FIG. 6 is a flowchart of a method for disabling an ambient light detection function of a front-facing camera when a screen is turned off according to an embodiment of this application;
FIG. 7 is another flowchart of disabling an ambient light detection function of a front-facing camera when a screen is turned off according to an embodiment of this application;
FIG. 8 is a flowchart of a camera enabling priority management method according to an embodiment of this application;
FIG. 9 is a flowchart of another camera enabling priority management method according to an embodiment of this application;
FIG. 10 is a flowchart of another camera enabling priority management method according to an embodiment of this application;
FIG. 11 is a flowchart of another camera enabling priority management method according to an embodiment of this application;
FIG. 12 is a flowchart of another camera enabling priority management method according to an embodiment of this application;
FIG. 13 is a flowchart of another camera enabling priority management method according to an embodiment of this application;
FIG. 14 is a flowchart of an ambient light detection function management method according to an embodiment of this application;
FIG. 15 is a flowchart of another ambient light detection function management method according to an embodiment of this application;
FIG. 16 is a flowchart of another ambient light detection function management method according to an embodiment of this application;
FIG. 17 is a flowchart of another ambient light detection function management method according to an embodiment of this application;
FIG. 18 is a flowchart of another ambient light detection function management method according to an embodiment of this application;
FIG. 19 is a flowchart of another ambient light detection function management method according to an embodiment of this application; and
FIG. 20 is a block diagram of performance optimization logic of an electronic device according to an embodiment of this application.

### DESCRIPTION OF EMBODIMENTS

To make the objective, technical solutions, and advantages of this application clearer, the technical solutions of this application are clearly and completely described below with reference to specific embodiments of this application and corresponding accompanying drawings. It is clear that the described embodiments are merely some but not all of embodiments of this application. Based on the embodiments of this application, all other embodiments obtained by a person of ordinary skill in the art without creative efforts fall within the protection scope of this application.

It should be noted that user information (including but not limited to user equipment information, personal information of a user, and the like) and data (including but not limited to data used for analysis, stored data, presented data, and the like) involved in this application are all information and data that are authorized by the user or that are fully authorized by each party. In addition, collection, use, and processing of the related data need to comply with relevant laws, regulations, and standards, and a corresponding operation entry is provided for the user to choose to authorize or reject.

In modern life, electronic devices such as a smartphone, a tablet computer, and a notebook computer have become essential objects in people's life. To meet use requirements of a user in different light scenarios, the electronic device provides an automatic luminance adjustment function. After a screen of the electronic device is turned on, ambient light luminance may be detected by using a built-in ambient light detection component, and then display luminance of the electronic device is adjusted based on the ambient light luminance detected by the ambient light detection component, so that the user has good viewing experience under different lighting conditions.

In the foregoing manner, although the display luminance can be adjusted, an additional ambient light detection component needs to be configured, which increases costs of the electronic device. Considering that a camera is configured on each electronic device currently, and most cameras have a light source detection function, when a camera that supports a normal mode (that is, a photographing mode) is used as an ambient light detection component, power consumption of the camera that supports the normal mode is relatively high, reducing performance of the electronic device. With development of science and technology, a camera may support a plurality of modes, including a normal mode, an ALS (Ambient Light Sensor mode, ambient light sensor) mode, a ULP (Ultra Low Power, ultra low power) mode, and the like. This makes it possible to use the camera as an ambient light detection component.

In view of this, the embodiments of this application propose a method for detecting ambient light luminance by using a target camera instead of an ambient light detection component and then adjusting display luminance based on the ambient light luminance detected by the target camera. The target camera has an ambient light detection function and an image capture function, and may be a front-facing camera of an electronic device, or may be a rear-facing camera of an electronic device. Considering that a display is disposed on an upper surface of the electronic device, the front-facing camera is also disposed on the upper surface of the electronic device and is located on the same side as the display, and ambient light luminance on different sides of the electronic device is different, to make adjusted display luminance better meet a current environment, an example in which the target camera is the front-facing camera is used for description in this application.

Adjusting the display luminance of the electronic device according to the method in the embodiments of this application can not only reduce costs of the electronic device, but also achieve low power consumption and high performance of the electronic device.

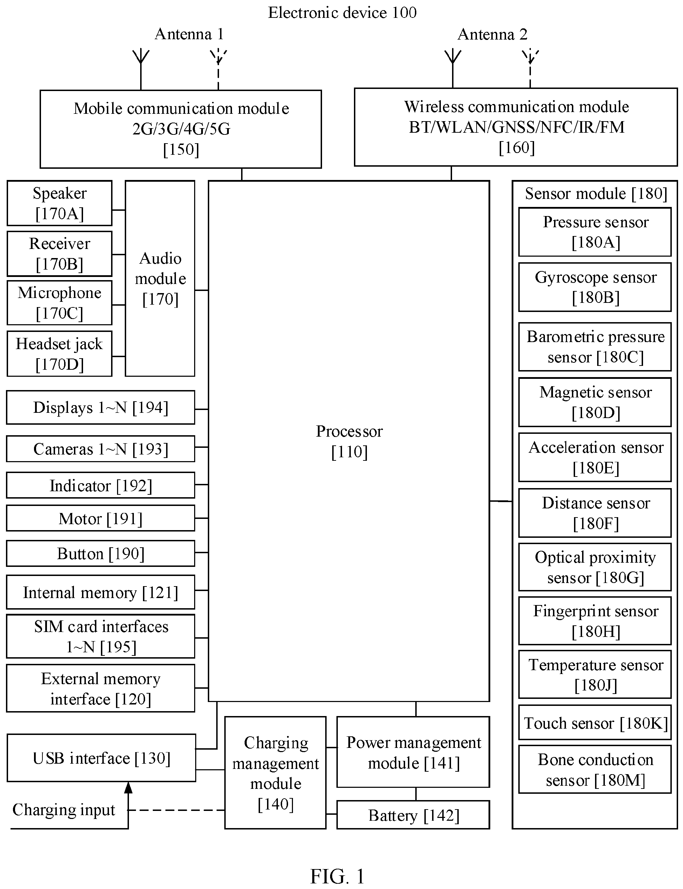

FIG. 1 is a schematic diagram of a structure of an electronic device 100. The electronic device 100 may be a mobile phone, a personal computer (Personal Computer, PC), a tablet computer, an AR (Augmented Reality, augmented reality) device, a VR (Virtual Reality, virtual reality) device, an in-vehicle computer, a wearable device, a smart home device, or the like. The electronic device 100 may include a processor 110, an internal memory 121, a camera 193, a display 194, and the like.

The processor 110 may include one or more processing units. For example, the processor 110 may include an application processor (Application Processor, AP), a modem processor, a graphics processing unit (Graphics Processing Unit, GPU), an image signal processor (Image Signal Processor, ISP), a controller, a video codec, a digital signal processor (Digital Signal Processor, DSP), a baseband processor, a neural-network processing unit (Neural-network Processing Unit, NPU), and/or the like. Different processing units may be independent devices, or may be integrated into one or more processors.

A memory may be further disposed in the processor 110, and is configured to store instructions and data. In some embodiments, the memory in the processor 110 is a cache. The memory may store instructions or data just used or cyclically used by the processor 110. When the processor 110 needs to use the instructions or the data again, the instructions or the data may be invoked directly from the memory, to avoid repeated access and reduce waiting time of the processor 110, thereby improving system efficiency.

In some embodiments, the processor 110 may include one or more interfaces. The interface may include an inter-integrated circuit (Inter-Integrated Circuit, I2C) interface, an inter-integrated circuit sound (Inter-Integrated Circuit Sound, I2S) interface, a pulse code modulation (Pulse Code Modulation, PCM) interface, a universal asynchronous receiver/transmitter (Universal Asynchronous Receiver/Transmitter, UART) interface, a mobile industry processor interface (Mobile Industry Processor Interface, MIPI), a general-purpose input/output (General-Purpose Input/Output, GPIO) interface, a subscriber identity module (Subscriber Identity Module, SIM) interface, a universal serial bus (Universal Serial Bus, USB) interface, and/or the like.

The internal memory 121 may be configured to store computer-executable program code, and the executable program code includes instructions. The internal memory 121 may include a program storage area and a data storage area. The program storage area may store an operating system, an application required by at least one function (for example, a sound playback function or an image playback function), and the like. The data storage area may store data (for example, audio data and a phone book) and the like created during use of the electronic device 100. In addition, the internal memory 121 may include a high-speed random access memory, and may further include a non-volatile memory, for example, at least one magnetic disk storage device, a flash memory device, or a universal flash storage (Universal Flash Storage, UFS). The processor 110 performs various function applications and data processing of the electronic device 100 by running the instructions stored in the internal memory 121 and/or instructions stored in the memory disposed in the processor.

The electronic device 100 may implement a display function by using the GPU, the display 194, the application processor, and the like. The GPU is a microprocessor for image processing and is connected to the display 194 and the application processor. The GPU is configured to perform mathematical and geometric computing for graphics rendering. The processor 110 may include one or more GPUs that execute program instructions to generate or change display information. The display 194 is configured to display an image, a video, and the like. The display 194 includes a display panel. The display panel may be a liquid crystal display (Liquid Crystal Display, LCD), an organic light-emitting diode (Organic Light-Emitting Diode, OLED), an active-matrix organic light-emitting diode (Active-Matrix Organic Light Emitting Diode, AMOLED), a flexible light-emitting diode (Flex Light-Emitting Diode, FLED), a Miniled, a MicroLed, a Micro-oLed, a quantum dot light-emitting diode (Quantum Dot Light Emitting Diodes, QLED), or the like. In some embodiments, the electronic device 100 may include one or N displays 194, where N is a positive integer greater than 1.

The electronic device 100 may implement an image shooting function by using the ISP, the camera 193, the video codec, the GPU, the display 194, the application processor, and the like. The ISP is configured to process data fed back by the camera 193. For example, during shooting, a shutter is pressed, and light is transmitted to a photosensitive element of the camera through a lens. An optical signal is converted into an electrical signal. The photosensitive element of the camera transmits the electrical signal to the ISP for processing, to convert the electrical signal into an image visible to naked eyes. The ISP may further perform algorithm optimization on noise, brightness, and complexion of the image. The ISP may further optimize parameters such as exposure and a color temperature of an image shooting scenario. In some embodiments, the ISP may be disposed in the camera 193. The camera 193 is configured to capture a still image or a video. An optical image of an object is generated through a lens and is projected onto a photosensitive element. The photosensitive element may be a charge coupled device (Charge Coupled Device, CCD) or a complementary metal-oxide-semiconductor (Complementary Metal-Oxide-Semiconductor, CMOS) phototransistor. The photosensitive element converts an optical signal into an electrical signal, and then transfers the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the electronic device 100 may include one or N cameras 193, where N is a positive integer greater than 1.

Optionally, the electronic device 100 may further include an external memory interface 120, a universal serial bus (Universal Serial Bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, and a subscriber identity module card interface 195. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, a bone conduction sensor 180M, and the like.

The external memory interface 120 may be configured to connect to an external memory card, for example, a Micro SD card, to expand a storage capacity of the electronic device 100. The external memory card communicates with the processor 110 through the external memory interface 120, to implement a data storage function. For example, files such as music and a video are stored in the external memory card.

The USB interface 130 is an interface that complies with USB standard specifications, and may be specifically a Mini USB interface, a Micro USB interface, a USB Type C interface, or the like. The USB interface 130 may be configured to connect to a charger to charge the electronic device 100, or may be configured to transmit data between the electronic device 100 and a peripheral device, or may be configured to connect to a headset to play audio by using the headset, or may be configured to connect to another electronic device such as an AR device.

The charging management module 140 is configured to receive a charging input from a charger. The charger may be a wireless charger or a wired charger. In some embodiments of wired charging, the charging management module 140 may receive a charging input from a wired charger through the USB interface 130. In some embodiments of wireless charging, the charging management module 140 may receive a wireless charging input by using a wireless charging coil of the electronic device 100. When charging the battery 142, the charging management module 140 may further supply power to the electronic device through the power management module 141.

The power management module 141 is configured to connect the battery 142, the charging management module 140, and the processor 110. The power management module 141 receives an input from the battery 142 and/or the charging management module 140, and supplies power to the processor 110, the internal memory 121, the display 194, the camera 193, the wireless communication module 160, and the like. The power management module 141 may also be configured to monitor parameters such as a battery capacity, a quantity of battery cycles, and a battery health status (power leakage and impedance). In some other embodiments, the power management module 141 may alternatively be disposed in the processor 110. In some other embodiments, the power management module 141 and the charging management module 140 may alternatively be disposed in a same device.

A wireless communication function of the electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive electromagnetic wave signals. Each antenna in the electronic device 100 may be configured to cover one or more communication frequency bands. Different antennas may be further reused to improve antenna utilization. For example, the antenna 1 may be reused into a diversity antenna of a wireless local area network. In some other embodiments, the antenna may be used together with a tuning switch.

The mobile communication module 150 may provide a solution for wireless communication that is applied to the electronic device 100 and that includes 2G/3G/4G/5G and the like. The mobile communication module 150 may include at least one filter, a switch, a power amplifier, a low noise amplifier (Low Noise Amplifier, LNA), and the like. The mobile communication module 150 may receive an electromagnetic wave by using the antenna 1, perform processing such as filtering or amplification on the received electromagnetic wave, and transmit a processed electromagnetic wave to the modem processor for demodulation. The mobile communication module 150 may further amplify a signal obtained after modulation by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same component as at least some modules of the processor 110.

The wireless communication module 160 may provide a solution for wireless communication that is applied to the electronic device 100 and that includes a wireless local area network (Wireless Local Area Networks, WLAN) (for example, a wireless fidelity (wireless fidelity, Wi-Fi) network), Bluetooth (Bluetooth, BT), a global navigation satellite system (Global Navigation Satellite System, GNSS), frequency modulation (Frequency Modulation, FM), near field communication (Near Field Communication, NFC), an infrared (Infrared, IR) technology, and the like. The wireless communication module 160 may be one or more devices integrating at least one communication processing module. The wireless communication module 160 receives an electromagnetic wave by using the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert, through the antenna 2, the to-be-sent signal into an electromagnetic wave for radiation.

In some embodiments, in the electronic device 100, the antenna 1 is coupled to the mobile communication module 150, and the antenna 2 is coupled to the wireless communication module 160, so that the electronic device 100 can communicate with a network and another device by using a wireless communication technology. The wireless communication technology may include a global system for mobile communications (Global System for Mobile communications, GSM), a general packet radio service (General Packet Radio Dervice, GPRS), code division multiple access (Code Division Multiple Access, CDMA), wideband code division multiple access (Wideband Code Division Multiple Access, WCDMA), time-division code division multiple access (Time-Division Code Division Multiple Access, TD-SCDMA), long term evolution (Long Term Evolution, LTE), BT, a GNSS, a WLAN, NFC, FM, an IR technology, and/or the like. The GNSS may include a global positioning system (Global Positioning System, GPS), a global navigation satellite system (Global Navigation Satellite System, GLONASS), a Beidou navigation satellite system (Beidou Navigation Satellite System, BDS), a quasi-zenith satellite system (Quasi-Zenith Satellite System, QZSS), a satellite based augmentation system (Satellite Based Augmentation Systems, SBAS), and/or the like.

The electronic device 100 may implement an audio function by using the audio module 170, the speaker 170A, the receiver 170B, the microphone 170C, the headset jack 170D, the application processor, and the like. For example, music playback or audio recording is implemented.

It can be understood that the structure illustrated in this embodiment of this application constitutes no specific limitation on the electronic device 100. In some other embodiments of this application, the electronic device 100 may include more or fewer components than those shown in the figure, combine some components, split some components, or have different component arrangements. The components shown in the figure may be implemented by hardware, software, or a combination of software and hardware. In addition, an interface connection relationship between the modules shown in this embodiment of this application is merely an example for description, and constitutes no limitation on the structure of the electronic device 100. In some other embodiments of this application, the electronic device 100 may alternatively use an interface connection manner different from that in the foregoing embodiment, or a combination of a plurality of interface connection manners.

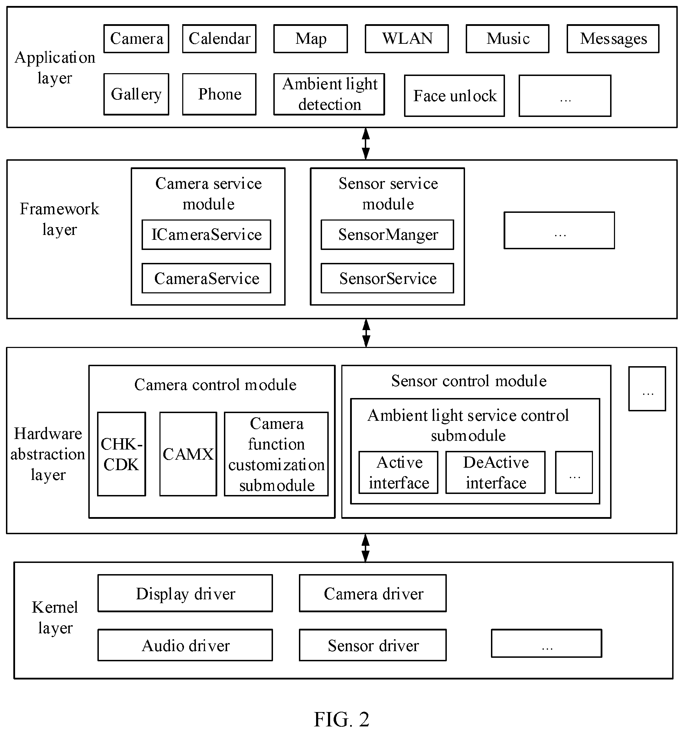

A software system is installed in the electronic device 100, and the software system may run on the processor 110. The software system may be an Android system, a Windows system, an IOS system, a Harmony system, or the like. An architecture used by the software system may be a layered architecture, an event-driven architecture, a micro-kernel architecture, a micro-service architecture, or a cloud architecture. In the embodiments of this application, an Android system with a layered architecture is used as an example to describe a software structure of the electronic device 100. Referring to FIG. 2, the Android system may be divided into four layers: an application layer, a framework (Framework, FWK) layer, a hardware abstraction layer (Hardware Abstraction Layer, HAL), and a kernel layer from top to bottom.

The application layer may include a series of applications, such as Camera, Calendar, Map, WLAN, Music, Messages, Gallery, Phone, Ambient light detection, and Face unlock, which are used to directly interact with a user. These applications may be built-in applications of the system, or may be non-system-level applications. In addition, these applications may have icons and application interfaces, may not have icons but have application interfaces, or may not have icons and application interfaces.

The framework layer includes some predefined functions, and may provide an application programming interface (Application Programming Interface, API) and a programming framework for applications at the application layer. The application programming interface provided by the framework layer may include an interface related to a camera service, an interface related to a sensor service, and an interface related to another service. Interfaces related to different services may be defined as different service modules. For example, the interface related to the sensor service may be defined as a sensor service module, the interface related to the camera service may be defined as a camera service module, and the interface related to the another service may be defined as another service module (not shown in the figure). The sensor service module may include submodules such as SensorManager and SensorSerivce. SensorManager is configured to adjust display luminance of the electronic device based on detected ambient light luminance. SensorSerivce is configured to implement communication between a related application that needs to invoke a sensor at the application layer and Sensor HAL. Optionally, the sensor service module may be used as an independent process, and SensorManager and SensorSerivce may be two threads in the process. The camera service module includes submodules such as ICameraSerivce and CameraSerivce. CameraService may be configured to implement communication between an application (for example, a camera application, a face unlock application, or an ambient light detection application) that needs to invoke a camera at the application layer and Camera HAL. Optionally, the camera service module may be used as an independent process, and ICameraSerivce and CameraSerivce may be two threads in the process. The electronic device is provided with a plurality of cameras, the plurality of cameras cannot be enabled at the same time, and different functions of a same camera cannot be enabled at the same time. When a front-facing camera is used instead of an ambient light detection component, to resolve a problem of enabling priorities of different functions of the plurality of cameras, in the embodiments of this application, CameraSerivce in the camera service module is modified, and determining logic for enabling priorities of different functions of the camera is added, so that when functions of two or more cameras need to be enabled at the same time, enabling can be performed according to the determining logic.

The hardware abstraction layer is located between the framework layer and the kernel layer, and is intended to abstract hardware. The hardware abstraction layer hides hardware interface details of a specific platform, provides a virtual hardware platform for a software system, and makes the software system hardware-independent and portable on a plurality of platforms. According to implemented functions, the hardware abstraction layer may be further refined into a camera-related hardware abstraction layer (for example, Camera HAL in subsequent embodiments), a sensor-related hardware abstraction layer (for example, Sensor HAL in subsequent embodiments), and the like. The camera-related hardware abstraction layer may be defined as a camera control module, and the sensor-related hardware abstraction layer may be defined as a sensor control module. Optionally, the camera control module may be used as an independent process, and the sensor control module may also be used as an independent process. To implement an ambient light detection function of the front-facing camera, the sensor control module (Sensor HAL) is modified in the embodiments of this application. Specifically, an ambient light service control submodule (that is, CameraLightManager in subsequent embodiments) is added to the sensor control module. The ambient light service control submodule provides a plurality of interfaces, including an Active interface, a DeActive interface, and the like. The Active interface is configured to enable the ambient light detection function of the front-facing camera. The DeActive interface is used to disable the ambient light detection function of the front-facing camera. In the embodiments of this application, the camera control module (Camera HAL) is further modified. Specifically, a camera function customization submodule (that is, CamxLightCustom in subsequent embodiments) is added to the camera control module, and an existing functional submodule (such as CHI-CDK or CAMX) in the camera control module is modified. The camera function customization submodule is configured to: when the front-facing camera is used as an ambient light detection component, obtain ambient light luminance detected by the front-facing camera, and send the ambient light luminance detected by the front-facing camera to the sensor control module, so that the sensor control module reports the ambient light luminance to the sensor service module, to adjust display luminance of the electronic device. CHI-CDK is a customizable code implementation set. In the embodiments of this application, code related to initialization of an AIDL (Android Interface Definition Language, Android interface definition language) service is added based on an original code implementation set of CHI-CDK, so that different processes (for example, Sensor HAL and Camera HAL) in the electronic device can communicate with each other. The AIDL is used to define an interface between a client and a server that communicate based on Binder in the Android system. Binder is an inter-process communication mechanism of the Android system, and allows communication between different processes, and even inter-device communication. CAMX is a code implementation set of a universal functional interface. In the embodiments of this application, based on an original code implementation set in CAMX, a first function (that is, an Open Camera function) in the code implementation set is modified, and a logic branch that can skip configuring an image output resource for the front-facing camera is added, so that when the front-facing camera is used as an ambient light detection component, a process of configuring an image output resource for the front-facing camera can be skipped, thereby reducing power consumption of the front-facing camera, and improving performance of the electronic device.

The kernel layer is a layer between hardware and software. The kernel layer may include a display driver, a camera driver, an audio driver, a sensor driver, and the like. Through these drivers, a display, a front/rear-facing camera, an audio player, a sensor, and the like can be driven.

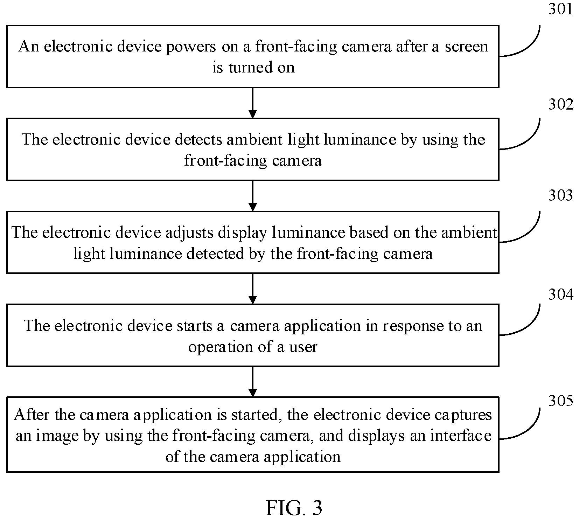

An embodiment of this application provides a display luminance adjustment method. An example in which the electronic device 100 having the software system shown in FIG. 2 performs this embodiment of this application is used. Referring to FIG. 3, a procedure of the method provided in this embodiment of this application includes the following steps.

301. The electronic device powers on a front-facing camera after a screen is turned on.

After the screen of the electronic device is turned on, an ambient light detection function is enabled. The electronic device powers on the front-facing camera, to enable the ambient light detection function of the front-facing camera. That the screen of the electronic device is turned on may be first screen-on after power-on, or may be non-first screen-on after power-on. If the electronic device is in a power-off state, the electronic device may be powered on by long pressing a power button, to light a display. If the electronic device is in a power-on state, the display of the electronic device may be lit in a manner such as touching the power button, touching the display by using a preset gesture (for example, double-tap), or uplifting the electronic device. After the screen of the electronic device is turned on, the front-facing camera may be powered on based on screen-on of the electronic device, to initialize the front-facing camera, so as to start the front-facing camera to detect ambient light luminance.

302. The electronic device detects ambient light luminance by using the front-facing camera.

After the front-facing camera is powered on, the ambient light detection function of the front-facing camera is enabled. The electronic device may detect, by using the front-facing camera, ambient light luminance of an environment in which the electronic device is located, to automatically adjust display luminance.

303. The electronic device adjusts the display luminance based on the ambient light luminance detected by the front-facing camera.

In a possible implementation, the ambient light luminance detected by the front-facing camera may be first ambient light luminance output by the front-facing camera, and the electronic device may adjust the display luminance based on the first ambient light luminance output by the front-facing camera. For example, the electronic device may use the first ambient light luminance as adjusted display luminance. Alternatively, default luminance of the display of the electronic device may be obtained, and the default luminance is adjusted based on the first ambient light luminance to obtain adjusted display luminance.

In another possible implementation, the ambient light luminance detected by the front-facing camera may be second ambient light luminance generated based on first ambient light luminance output by the front-facing camera, and the electronic device may adjust the display luminance based on the second ambient light luminance. For example, the electronic device may use the second ambient light luminance as adjusted display luminance. Alternatively, default luminance of the display of the electronic device may be obtained, and the default luminance is adjusted based on the second ambient light luminance to obtain adjusted display luminance.

Considering that when the electronic device adjusts the display luminance, the electronic device does not need to display an image if a camera application is not started, to reduce power consumption of the front-facing camera and improve performance of the electronic device, in a process in which the electronic device adjusts the display luminance, the front-facing camera does not capture an image.

304. The electronic device starts the camera application in response to an operation of a user.

After the screen of the electronic device is turned on, the electronic device may detect a touch operation performed by the user on the camera application. When detecting a touch operation performed by the user on an icon of the camera application, the electronic device starts the camera application. The electronic device may further detect an invocation operation performed by a third-party application on the camera application. When detecting that the third-party application invokes the camera application, the electronic device may start the camera application.

305. After the camera application is started, the electronic device captures an image by using the front-facing camera, and displays an interface of the camera application.

Before the camera application is started, the front-facing camera has been powered on, and the electronic device adjusts the display luminance by using the ambient light luminance detected by the front-facing camera. After the camera application is started, a photographing function of the front-facing camera needs to be enabled based on the camera application being started. In this case, the ambient light detection function of the front-facing camera is enabled, and the photographing function is not enabled. Generally, each camera usually has one function enabled. To implement the photographing function of the front-facing camera, the electronic device powers off the front-facing camera to disable the ambient light detection function of the front-facing camera, and then powers on the front-facing camera to enable the photographing function of the front-facing camera. After the photographing function of the front-facing camera is enabled, the electronic device may obtain an image captured by the front-facing camera, and then display, on an interface of the camera application, the image captured by the front-facing camera, to meet a photographing requirement of the user.

Optionally, after the camera application is started, the electronic device may not adjust the display luminance, thereby reducing power consumption of the electronic device and improving performance of the electronic device.

In another embodiment of this application, after the camera application is enabled, the electronic device closes the camera application in response to an operation of the user. After the camera application is closed, the electronic device detects ambient light luminance by using the front-facing camera, and then adjusts the display luminance based on the ambient light luminance detected by the front-facing camera. In a process in which the electronic device adjusts the display luminance, the front-facing camera does not capture an image. Specifically, when the electronic device detects the ambient light luminance by using the front-facing camera, based on the camera application being closed, the electronic device may power off the front-facing camera to disable the photographing function of the front-facing camera, and then power on the front-facing camera to enable the ambient light detection function of the front-facing camera, so as to obtain the ambient light luminance detected by the front-facing camera.

In another embodiment of this application, to protect information security of the user, a lock screen password may be set for the display of the electronic device. The electronic device may perform unlocking by obtaining a lock screen password entered by the user, or may unlock the display by starting a face unlock application and capturing a facial image by using the front-facing camera. In this way, after the screen of the electronic device is turned on, not only the face unlock application is started to perform a face unlock operation, but also an ambient light detection application is started to perform a display luminance adjustment operation. After the screen of the electronic device is turned on, if the electronic device first receives a start instruction of the face unlock application for the front-facing camera, and then receives a start instruction of the ambient light detection application for the front-facing camera, the electronic device first enables a face unlock function of the front-facing camera, and after the screen is unlocked, enables the ambient light detection function of the front-facing camera.

Specifically, after the screen of the electronic device is turned on, the face unlock application is started. After the face unlock application is started, the electronic device captures an image by using the front-facing camera. After the display is unlocked, the face unlock application is closed. After the face application is closed, the electronic device powers off the front-facing camera to disable the face unlock function of the front-facing camera, and then powers on the front-facing camera to enable the ambient light detection function of the front-facing camera, so as to adjust the display luminance by using ambient light luminance detected by the front-facing camera.

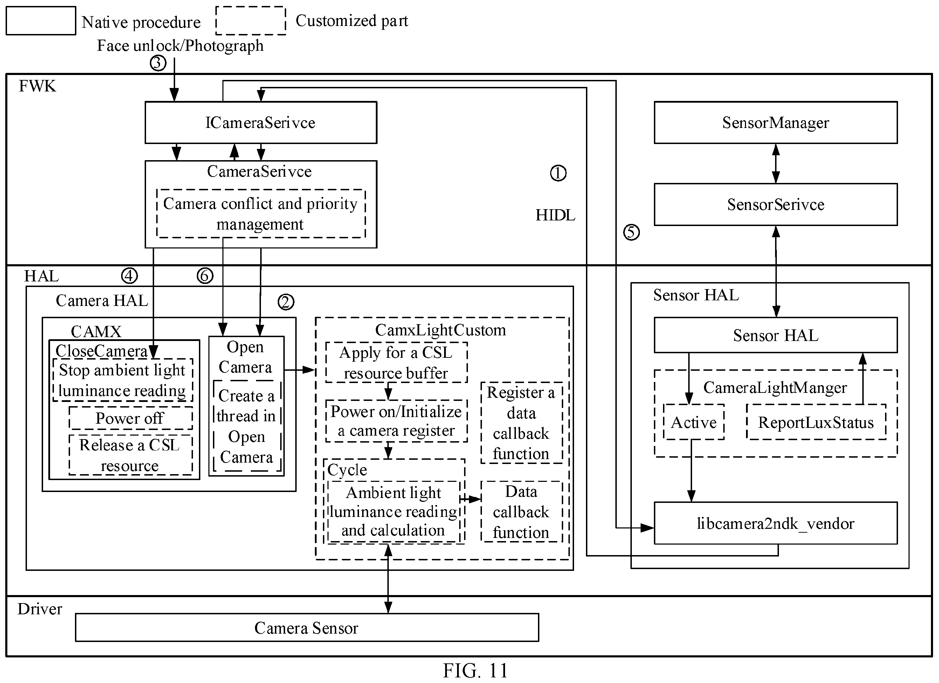

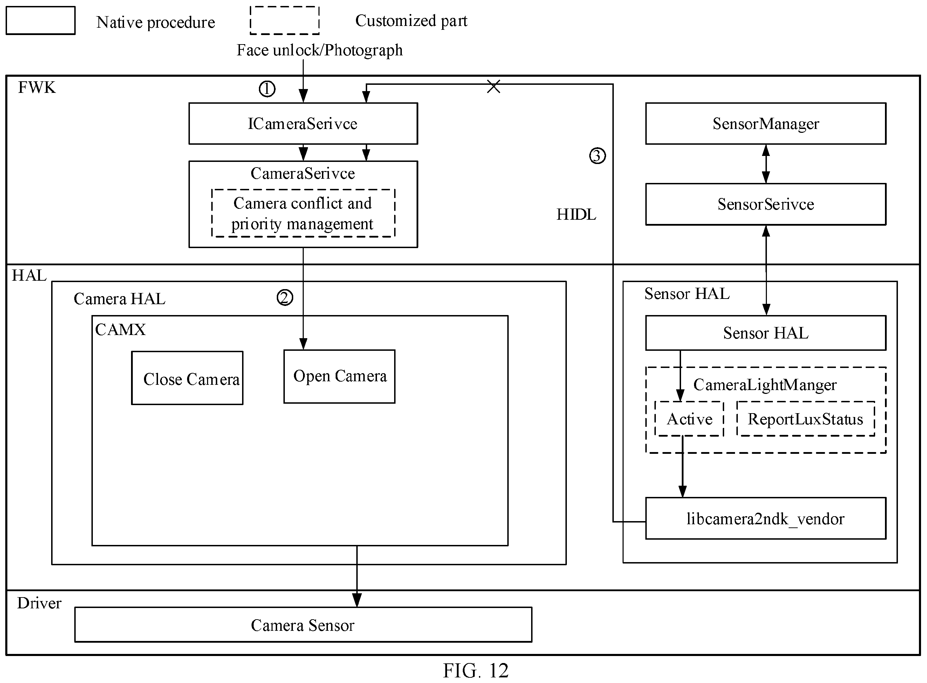

Certainly, if the electronic device first receives a start instruction of the ambient light detection application for the front-facing camera, and then receives a start instruction of the face unlock application for the front-facing camera, the electronic device first enables the ambient light detection function of the front-facing camera to adjust the display luminance, and then enables the face unlock function of the front-facing camera to unlock the display. After the screen of the electronic device is turned on, for underlying processing logic of the electronic device in different enabling sequences of the ambient light detection function and the face unlock function of the front-facing camera, refer to subsequent flowcharts in FIG. 11 and FIG. 12. Details are not described herein.

For the electronic device having the software system shown in FIG. 2, the camera service module may control, by delivering an instruction to the camera control module, starting and closing of the front-facing camera, and the sensor service module may control, by delivering an instruction to the sensor control module, starting and closing of the ambient light detection component. When the front-facing camera is used instead of the ambient light detection component, starting and closing of the front-facing camera need to be controlled by an instruction delivered by the sensor service module. Because the sensor control module cannot transfer the instruction delivered by the sensor service module to the front-facing camera, and the camera control module can transfer the instruction delivered by the camera service module to the front-facing camera, to replace the ambient light detection component with the front-facing camera, a control path between the sensor control module and the camera service module needs to be established, to control the front-facing camera by using the camera service module. In this embodiment of this application, the sensor control module at the HAL layer may be used as an independent process, and the camera service module at the FWK layer may also be used as an independent process. Therefore, when the control path between the sensor control module at the HAL layer and the camera service module at the FWK layer is established, the control path may be established based on an HIDL service. The HIDL is used to define an interface between the HAL layer and the FWK layer that communicate based on Binder in the Android system.

After the control path between the sensor control module and the camera service module is established, a data path between the sensor control module and the camera control module further needs to be established, so that after the ambient light detection function of the front-facing camera is enabled, the camera control module can send, to the sensor control module, the ambient light luminance detected by the front-facing camera, and then the sensor control module sends the ambient light luminance to the sensor service module, to adjust the display luminance.

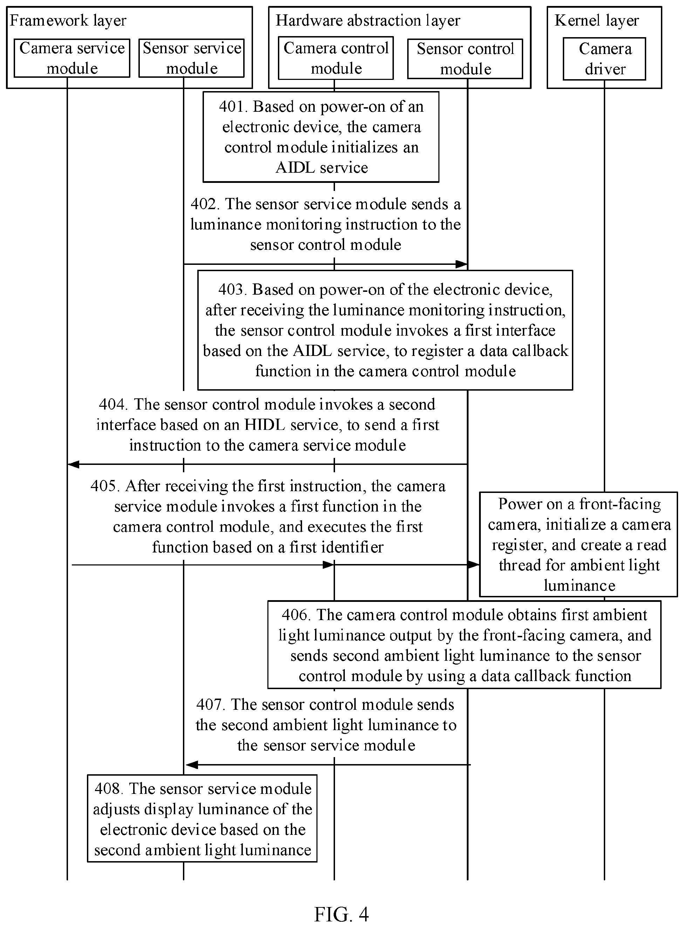

For a process of establishing the data channel between the sensor control module and the camera control module, refer to FIG. 4. An embodiment of this application provides a display luminance adjustment method. The method may be performed by the electronic device 100 having the software system shown in FIG. 2. A procedure of the method provided in this embodiment of this application includes the following steps.

401. Based on power-on of the electronic device, a camera control module initializes an AIDL service.

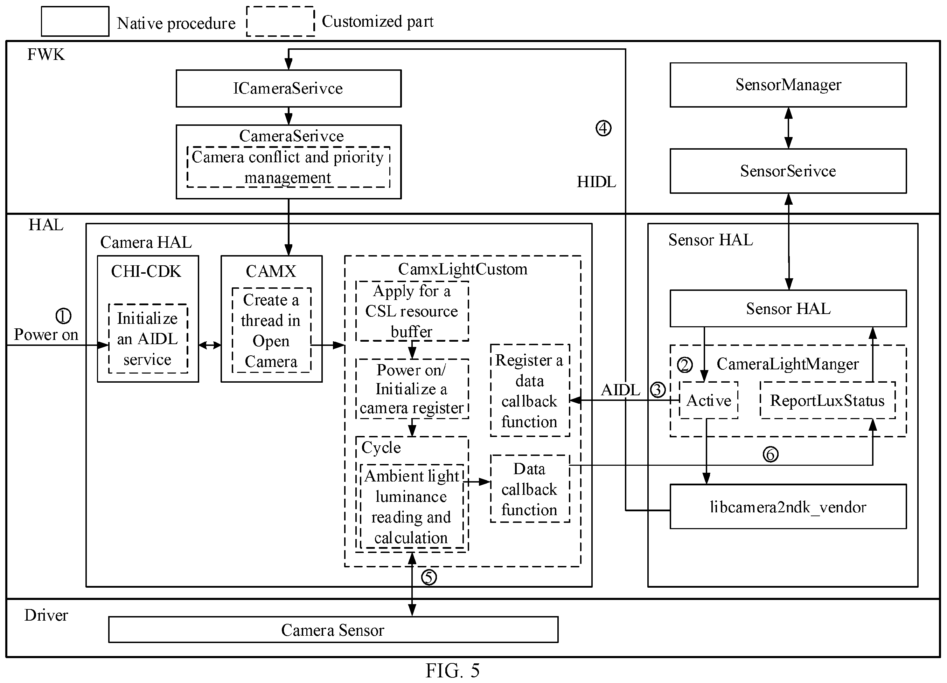

In this embodiment of this application, the camera control module (that is, Camera HAL) may be used as an independent process. The independent process may be defined as a camera control process. Submodules (such as CHK-CDK, CAMX, and CamxLightCustom) included in the camera control module may be different threads in the camera control process. Initialization of the AIDL service may be a process of starting the AIDL service. Through initialization of the AIDL service, communication between a client and a server based on the AIDL service can be implemented. Initialization of the AIDL service may be performed in the camera control module, and specifically, may be performed in CHK-CDK of the camera control module. The AIDL service may be initialized in a process in which the electronic device is powered on, or may be initialized when communication needs to be performed between the client and the server based on the AIDL service after power-on. An occasion for initializing the AIDL service is not limited in this embodiment of this application. A process of initializing the AIDL service may be corresponding to step ① in FIG. 5. Referring to FIG. 5, when the electronic device is powered on, initialization of the AIDL service in CHI-CDK of Camera HAL may be starting the AIDL service.

Optionally, the AIDL service initialization process may be implemented by using the following code:

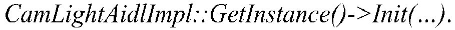

402. A sensor service module sends a luminance monitoring instruction to a sensor control module.

In this embodiment of this application, the sensor service module (that is, SensorService) may be used as an independent process. The independent process may be defined as a sensor service process. A submodule (such as SensorManager or SensorService) included in the sensor service module may be a thread in the sensor service process. The sensor control module (that is, Sensor HAL) may also be used as an independent process. The independent process may be defined as a sensor control process. A submodule (such as CameraLightManager) included in the sensor control module may be a thread in the sensor control process.

After the electronic device is powered on, an ambient light detection application at an application layer sends a screen-on message to the sensor service module, where the screen-on message may include a package name of the ambient light detection application, and the screen-on message is used to indicate the sensor service module to adjust display luminance of the electronic device. After receiving the screen-on message, the sensor service module sends the luminance monitoring instruction to the sensor control module. The luminance monitoring instruction is used to indicate the sensor control module to obtain ambient light luminance. The luminance monitoring instruction may be in a callback function form, so that after obtaining the ambient light luminance, the sensor control module can return the obtained ambient light luminance to the sensor service module.

Optionally, that the sensor service module sends the luminance monitoring instruction to the sensor control module may be that the sensor service process sends the luminance monitoring instruction to the sensor control process. Referring to FIG. 5, that the sensor service module sends the luminance monitoring instruction to the sensor control module may be specifically: SensorManager at an FWK layer generates the luminance monitoring instruction based on the screen-on message sent by the ambient light detection application at the application layer, and sends the luminance monitoring instruction to Sensor HAL at an HAL layer through SensorService.

403. After receiving the luminance monitoring instruction, the sensor control module invokes a first interface based on the AIDL service, to register a data callback function in the camera control module.

After receiving the luminance monitoring instruction, the sensor control module invokes the first interface based on the AIDL service to register the data callback function in the camera control module, which may be that based on the luminance monitoring instruction, the sensor control module invokes the first interface to register the data callback function in the camera control module, or may be that in response to the luminance monitoring instruction, the sensor control module invokes the first interface to register the data callback function in the camera control module.

In the computer field, the AIDL service is used to implement communication between different processes. For two processes that communicate based on the AIDL service, one process is configured to generate data, and may be used as an AIDL server, and the other process is configured to send a control instruction and receive data, and may be used as an AIDL client. In this embodiment of this application, when a front-facing camera is used instead of an ambient light detection component, the camera control module (Camera HAL) is configured to provide ambient light luminance and may be used as an independent process, and therefore may be considered as an AIDL server (referred to as a server for short in subsequent embodiments). The sensor control module (Sensor HAL) is configured to receive the ambient light luminance, and therefore may be considered as an AIDL client (referred to as a client for short in subsequent embodiments).

The first interface may be an Active interface. The Active interface is used to enable an ambient light detection function of the front-facing camera. After the sensor control module invokes the Active interface to enable the ambient light detection function of the front-facing camera, the sensor control module may invoke the Active interface to register the data callback function in the camera control module. By using the data callback function, the camera control module may send, to the sensor control module, ambient light luminance detected by the front-facing camera, so that a data path between the camera control module and the sensor control module is established, and an ambient light component can be replaced with the front-facing camera.

In this embodiment of this application, before the sensor control module invokes the Active interface to register the data callback function in the camera control module, the Active interface needs to first perform declaration. Because the Active interface is an AIDL interface, the declaration of the Active interface usually includes two parameters. One parameter may be a process identifier (Process Identifier, PID) of the client, that is, a process identifier of the process corresponding to the sensor control module (Sensor HAL) used as the client. The other parameter may be a callback object (CallBack) of the client, that is, an object used to receive ambient light luminance in the sensor control module. Optionally, the callback object corresponds to ReportLusStatus in FIG. 5.

The following code may be used for declaration of the Active interface:

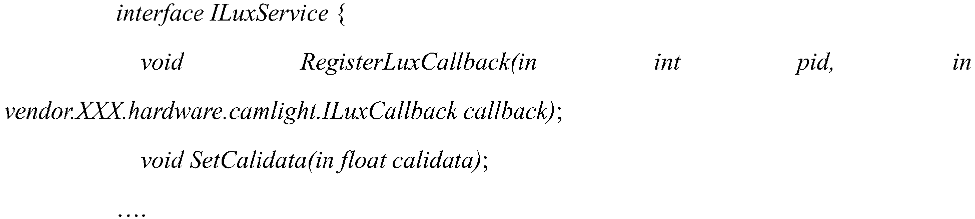

Further, based on declaration content of the Active interface, the sensor control module and the camera control module may separately register callback interfaces locally. After registration of the callback interfaces in the sensor control module and the camera control module is completed, registration of the data callback function in the camera control module is completed. Optionally, the sensor control module may register the callback interface in CamLightManager, and the camera control module may register the callback interface in CamxLightCustom.

When the callback interface in the sensor control module is registered, the following code may be used:

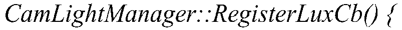

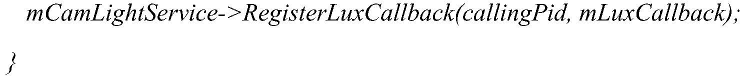

When the callback interface in the camera control module is registered, the following code may be used:

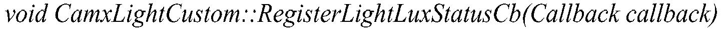

Optionally, the step of invoking, by the sensor control module, the first interface based on the AIDL service to register the data callback function in the camera control module may be corresponding to steps ② and ③ in FIG. 5. Specifically, after receiving the luminance monitoring instruction, Sensor HAL invokes the Active interface in CamLightManager, registers the callback interface in CamLightManager based on the declaration content of the Active interface, and registers the callback interface in CamxLightCustom. Registration of the data callback function is completed after registration of the callback interfaces in CamLightManager and CamxLightCustom is completed.

Optionally, when the ambient light detection function of the front-facing camera is enabled, the data callback function can return ambient light luminance detected by the front-facing camera to the sensor control module. In addition, after the ambient light detection function fails to be enabled or the camera is closed because the ambient light detection function of the front-facing camera fails to be enabled or is disabled, the data callback function can send a notification message to the sensor control module, so that the sensor control module enables the ambient light detection function of the front-facing camera.

Optionally, due to a limitation of photosensitive precision of the front-facing camera, there is an error between the ambient light luminance detected by the front-facing camera and ambient light luminance in an actual environment. To improve accuracy of display luminance adjustment, in this embodiment of this application, when registering the callback interface, the camera control module may further register a data calibration interface function in the callback interface. The data calibration function is used to provide a calibration coefficient for the ambient light luminance detected by the front-facing camera and the ambient light luminance in the actual environment, and may calibrate the ambient light luminance detected by the front-facing camera when the ambient light luminance detected by the front-facing camera is returned based on the callback interface. The data calibration function may be *LuxValueConvert().*

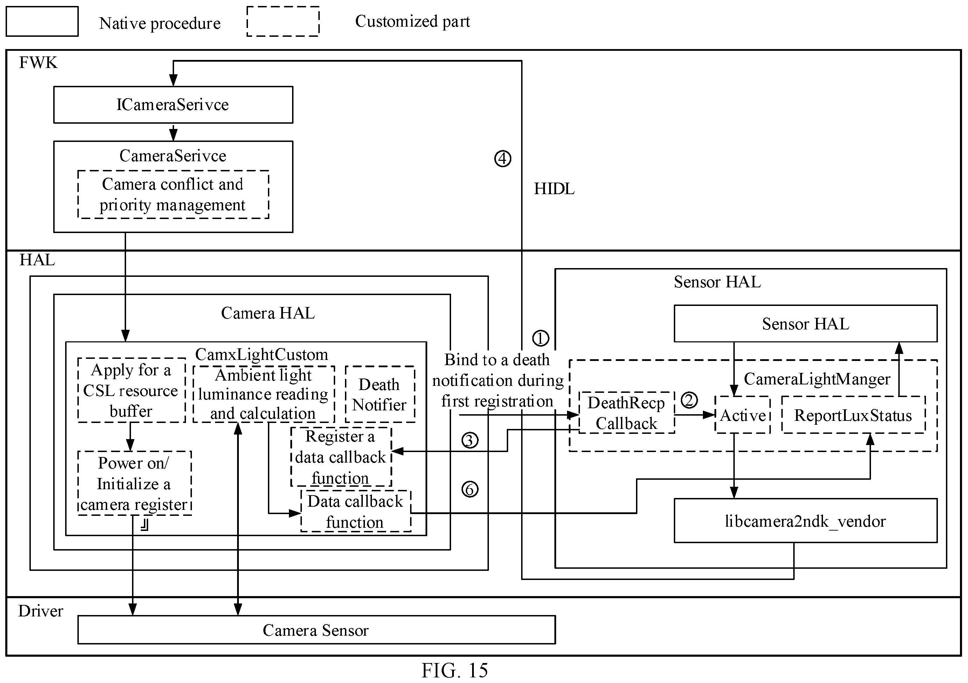

Optionally, a process may suddenly crash during running of the electronic device, and a crash may also occur for the server and the client related to the AIDL. In this embodiment of this application, to monitor a crash of the camera control module (the server) and the sensor control module (the client) in a timely manner, the sensor control module and the camera control module may separately register death monitoring objects locally. In a possible implementation, the camera control module may register a first death monitoring object locally when registering the callback interface. Through registration of the first death monitoring object, a crash of the camera control module in a screen-on scenario and a screen-off scenario can be monitored. The sensor control module may register a second death monitoring object locally when registering the callback interface. Through registration of the second death monitoring object, a crash of the sensor control module in a screen-on scenario and a screen-off scenario can be monitored. Optionally, corresponding to step ① in FIG. 15, the following may be specifically included: In a process in which SensorHAL registers the callback interface in CamLightManager, the second death monitoring object may be registered in CamLightManager, so that when a crash event of SensorHAL is monitored, a death notification message is generated to notify Camera HAL In a process in which Camera HAL registers the callback interface in CamxLightCustom, the first death monitoring object may be registered in CamxLightCustom, so that when a crash event of Camera HAL is monitored, a death notification message is generated to notify SensorHAL.

Optionally, for electronic devices, front-facing cameras on some electronic devices may support the ambient light detection function, and front-facing cameras on some electronic devices may not support the ambient light detection function. To avoid an enable operation on the front-facing camera that does not support the ambient light detection function, and reduce resource consumption of the electronic device, before invoking the first interface to enable the ambient light detection function of the front-facing camera, the sensor control module may specifically obtain a value of a preset flag bit before step 403 is performed, for example, when the electronic device is powered on or when the luminance monitoring instruction is received, and then determine, based on the value of the preset flag bit, whether the front-facing camera on the electronic device supports the ambient light detection function. When the front-facing camera supports the ambient light detection function, the first interface is invoked to enable the ambient light detection function of the front-facing camera. When the front-facing camera does not support the ambient light detection function, the first interface is no longer invoked. The preset flag bit may be is_ambient_light, and is used to indicate whether the front-facing camera supports the ambient light detection function. The value of the preset flag bit may be ture or flase. When the value of the preset flag bit is ture, it may be determined that the front-facing camera supports the ambient light detection function. When the value of the preset flag bit is flase, it may be determined that the front-facing camera does not support the ambient light detection function.

It should be noted that, when the electronic device is not powered off, the data callback function registered in this step may be directly used without re-registration when the front-facing camera is subsequently invoked to detect ambient light luminance. When the electronic device is powered off, the data callback function registered in this step is destructed. When the electronic device is powered on again subsequently, the foregoing step 401 to step 403 need to be performed to register the data callback function.

404. The sensor control module invokes a second interface based on an HIDL service, to send a first instruction to a camera service module.

Generally, cameras include two types: a front-facing camera and a rear-facing camera, and there is at least one front-facing camera and at least one rear-facing camera. In addition, the front-facing camera and the rear-facing camera each have a plurality of functions, including at least one of a photographing function, a face unlock function, an ambient light detection function, and the like. To distinguish between different types of cameras and different functions of cameras of a same type, in this embodiment of this application, a plurality of logical cameras are abstracted based on types and functions of the cameras, and each logical camera corresponds to one identifier. For example, a logical camera A may be abstracted based on the photographing function of the front-facing camera, and a logical camera B may be abstracted based on the ambient light detection function of the front-facing camera. The logical camera A and the logical camera B may be corresponding to a same front-facing camera, or may be corresponding to different front-facing cameras. An identifier that is set for the logical camera A, that is, the photographing function of the front-facing camera, is Camera ID=1, and an identifier that is set for the logical camera B, that is, the ambient light detection function of the front-facing camera, is Camera ID=4.

In this embodiment of this application, the sensor control module may invoke the first interface to generate the first instruction, and then the second interface sends the first instruction to the camera service module. The second interface is an interface of the HIDL service, and may be libcamera2ndk_vendor in FIG. 5 or the like. The camera service module may be used as an independent process, and the independent process may be defined as a camera service process. The first instruction may be an Open Camera instruction. The first instruction may include a first identifier, and the first identifier is corresponding to the ambient light detection function of the front-facing camera, and may be Camera ID=4. The first instruction may further include a first package name, and the first package name is a package name of an ambient light detection application.

Optionally, that the sensor service module invokes the second interface to send the first instruction to the camera service module may be corresponding to step ④ in FIG. 5, and specifically includes: invoking the Active interface of CamLightManager in Sensor HAL to generate the first instruction, and sending the first instruction to ICameraService at the FWK layer by using the libcamera2ndk_vendor interface based on the HIDL service.

405. After receiving the first instruction, the camera service module invokes a first function in the camera control module, and executes the first function based on the first identifier, to control a camera driver to power on the front-facing camera, initialize a camera register, and create a read thread for ambient light luminance.

Optionally, in this step, an operation such as powering on the front-facing camera or initializing the camera register may be a specific process of starting the front-facing camera, or may be a process of powering on and initializing the front-facing camera.

The first function is used to enable any function of any camera in the electronic device, and the first function may be an Open Camera function. After receiving the first instruction, the camera service module may invoke the first function in the camera control module, and execute the first function based on the first identifier. Based on the first identifier, the ambient light detection function of the front-facing camera that needs to be started may be determined. In this case, the front-facing camera is used instead of an ambient light detection component. When the front-facing camera is used instead of the ambient light detection component, the front-facing camera needs to detect ambient light luminance, and does not need to capture an image. To reduce power consumption of the front-facing camera, the camera service module performs, based on the first identifier, a procedure necessary for enabling the ambient light detection function of the front-facing camera in the first function, such as applying for a CSL resource buffer, powering on the front-facing camera, initializing the camera register, and creating the read thread for ambient light luminance, and skips a procedure independent of enabling the ambient light detection function of the front-facing camera, such as a procedure for configuring an image output resource. A corresponding control instruction may be generated by executing the first function, and the control instruction is delivered to the camera driver, to control the camera driver to apply for the CSL resource buffer for the front-facing camera, power on the front-facing camera, initialize the camera register, create the read thread, and the like. The created read thread is configured to read and calculate ambient light luminance detected by the front-facing camera. Optionally, the read thread may be an asynchronous read thread. Optionally, the read thread may periodically read ambient light luminance detected by the front-facing camera. Based on initialization of the camera register, a period in which the front-facing camera detects ambient light luminance, a frequency at which the front-facing camera detects ambient light luminance, and the like may be written into a front-facing register, to control the front-facing camera to work.

Optionally, this step may be corresponding to ⑤ in FIG. 5, and specifically includes: when the first instruction is received, invoking the Open Camera function in CAMX of Camera HAL by using CameraService, and executing the Open Camera function to send a control instruction to the camera driver by using an interface of CamxLightCustom, so that the camera driver applies for the CSL resource buffer for the ambient light detection function of the front-facing camera, powers on the front-facing camera, initializes the camera register, and creates the asynchronous read thread.

According to the method in this embodiment of this application, when the front-facing camera is used instead of the ambient light detection component, an image output resource is not configured for the front-facing camera, and the front-facing camera does not capture an image, so that resource consumption of the front-facing camera is reduced, and performance of the electronic device is improved.

406. The camera control module obtains first ambient light luminance output by the front-facing camera, and sends second ambient light luminance to the sensor control module by using the data callback function.

The second ambient light luminance is generated based on the first ambient light luminance. The second ambient light luminance may be equal to the first ambient light luminance, or the second ambient light luminance may not be equal to the first ambient light luminance. When the second ambient light luminance is not equal to the first ambient light luminance, the second ambient light luminance may be generated based on the first ambient light luminance and third ambient light luminance. The third ambient light luminance is calibrated ambient light luminance obtained by calibrating the first ambient light luminance by using the calibration coefficient provided by the data calibration function. The second ambient light luminance may be alternatively generated based on the first ambient light luminance, the third ambient light luminance, and a status parameter of the front-facing camera. The status parameter includes available and unavailable. Available means that the ambient light detection function of the front-facing camera is available, and unavailable means that the ambient light detection function of the front-facing camera is unavailable. It should be noted that, in this embodiment of this application, the first ambient light luminance and the second ambient light luminance each are not one luminance value, but represent a type of luminance values. For example, the first ambient light luminance represents luminance values output by the front-facing camera at different moments, and the second ambient light luminance represents luminance values sent by the camera control module to the sensor control module at different moments.

In a possible implementation, the camera driver may periodically read, by using the read thread, the first ambient light luminance detected by the front-facing camera, and send the read first ambient light luminance to the camera control module, so that the camera control module can obtain the first ambient light luminance output by the front-facing camera. The read period may be 200 ms. The camera driver may alternatively periodically read, by using the read thread, the first ambient light luminance detected by the front-facing camera, and store the read first ambient light luminance in a buffer. The camera control module may periodically read the first ambient light luminance stored in the buffer of the camera driver, to obtain the first ambient light luminance output by the front-facing camera. Optionally, a read period of the camera driver may be the same as or different from the read period of the camera control module.

Optionally, the camera control module may send the second ambient light luminance to the sensor control module by using a pre-registered data callback function. Specifically, the camera control module may fill the second ambient light luminance in the pre-registered data callback function, to send the second ambient light luminance to the sensor control module by using the data callback function.

With reference to different content of the second ambient light luminance, that the camera control module sends the second ambient light luminance to the sensor control module by using the pre-registered data callback function specifically includes the following several manners.

In a first manner, the camera control module fills the first ambient light luminance output by the front-facing camera in the data callback function, and sends the first ambient light luminance to the sensor control module by using the data callback function.

In a second manner, the camera control module fills the first ambient light luminance detected by the front-facing camera and the calibrated third ambient light luminance in the data callback function, and sends the first ambient light luminance and the second ambient light luminance to the sensor control module by using the data callback function.

In a third manner, the camera control module fills the first ambient light luminance detected by the front-facing camera, the calibrated third ambient light luminance, and the status parameter of the front-facing camera in the data callback function, and sends the first ambient light luminance, the second ambient light luminance, and the status parameter to the sensor control module by using the data callback function.

For the third manner, a form of a filled data callback function may be:

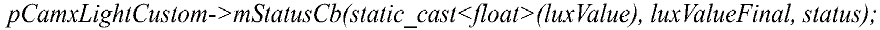

luxValue is the first ambient light luminance, that is, the ambient light luminance detected by the front-facing camera, luxValueFinal is the third ambient light luminance, that is, the calibrated ambient light luminance, and status is the status parameter of the front-facing camera.

Optionally, three specific implementations are enumerated herein. Only one of the manners may be selected to return the second ambient light luminance, or a plurality of manners may be selected to return the second ambient light luminance. The second ambient light luminance may be returned each time in a same manner or in a different manner. For example, the second ambient light luminance may be returned for the first time in the first implementation, the second ambient light luminance may be returned for the second time in the second implementation, the second ambient light luminance may be returned for the third time in the third implementation, and so on. Alternatively, the second ambient light luminance may be returned once in a plurality of manners each time, and then the second ambient light luminance returned in the plurality of manners is fused.

407. The sensor control module sends the second ambient light luminance to the sensor service module.

Optionally, the ReportLuxStatus object in the sensor control module may receive the second ambient light luminance sent by the camera control module, and further send the second ambient light luminance to the sensor service module.

In a possible implementation, when the sensor service module sends the luminance monitoring instruction to the sensor control module, a callback function is registered in the sensor control module. By using the callback function, the sensor control module may send the second ambient light luminance to the sensor service module. Optionally, the sensor control module may fill the second ambient light luminance in the callback function, and send the second ambient light luminance to the sensor control module by using the callback function.

In another possible implementation, the sensor service module may periodically read the second ambient light luminance from the sensor control module.

For processing logic of the sensor control module for the second ambient light luminance, refer to the following code:

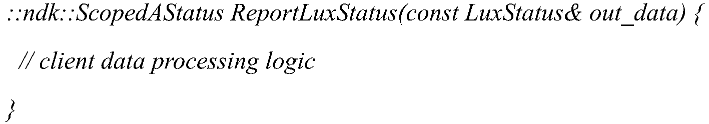

Optionally, step 406 and step 407 may be corresponding to ⑤ and ⑥ in FIG. 5, and specifically include: CamxLightCustom of Camera HAL obtains the first ambient light luminance output by the front-facing camera, and returns the second ambient light luminance to the ReportLuxStatus object in CamLightManager of Sensor HAL by using a pre-registered data callback function, and the ReportLuxStatus object reports the second ambient light luminance to SensorManager by using SensorSerivce.

408. The sensor service module adjusts display luminance of the electronic device based on the second ambient light luminance.

In a possible implementation, adjusting the luminance of the display may be setting the luminance of the display. Specifically, the sensor service module may determine luminance of the display based on the second ambient light luminance, and further set the luminance of the display to the determined luminance. The sensor service module may alternatively determine luminance of the display based on historical ambient light luminance and the second ambient light luminance, and further set the luminance of the display to the determined luminance.

In another possible implementation, adjusting the luminance of the display may be adjusting initial luminance based on the initial luminance of the display. The initial luminance may be a luminance value preset by a skilled person. Specifically, the sensor service module may determine luminance of the display based on the second ambient light luminance, and then adjust the luminance of the display from the initial luminance to the determined luminance. The sensor service module may alternatively determine luminance of the display based on historical ambient light luminance and the second ambient light luminance, and then adjust the luminance of the display from the initial luminance to the determined luminance. Optionally, when the luminance of the display is adjusted from the initial luminance to the determined luminance, the luminance may be gradually adjusted, to avoid that an excessive luminance change affects user experience.

Optionally, when adjusting the luminance of the display, the sensor service may generate a luminance adjustment instruction, and further send the luminance adjustment instruction to the sensor control module. The sensor control module sends the luminance adjustment instruction to a display driver, so that the display driver executes the luminance adjustment instruction to adjust the luminance of the display.

The foregoing is described by using an example in which screen-on of the electronic device is first screen-on during power-on. When screen-on of the electronic device is non-first screen-on, the electronic device may not perform the process of initializing the AIDL service in step 401 and the process of registering the data callback function in step 403, but perform another step. For details, refer to a procedure shown in FIG. 4 or FIG. 5. Details are not described herein.

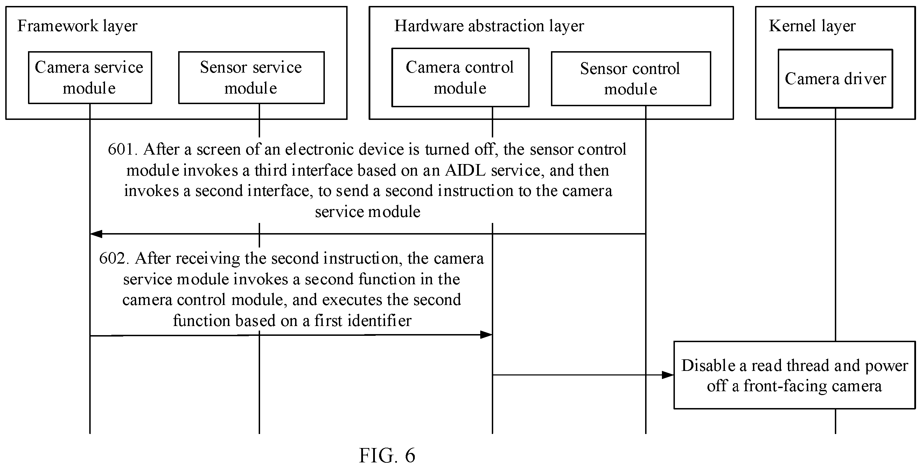

Referring to FIG. 6, an embodiment of this application provides a method for disabling an ambient light detection function of a front-facing camera when a screen is turned off. In the method, the ambient light detection function of the front-facing camera may be disabled when the screen of an electronic device is turned off, to reduce power consumption of the electronic device. An example in which the electronic device 100 having the software system shown in FIG. 2 performs this embodiment of this application is used. The method may be independent of the display luminance adjustment procedure shown in FIG. 4 without a time sequence relationship, or may be performed at any time after step 405 in FIG. 4. Referring to FIG. 6, a procedure of the method provided in this embodiment of this application includes the following steps.

601. After the screen of the electronic device is turned off, a sensor control module invokes a third interface based on an AIDL service, and then invokes a second interface to send a second instruction to a camera service module.

Optionally, based on screen-off of the electronic device, a sensor service module may receive a screen-off message of the electronic device, and after receiving the screen-off message, the sensor service module may send a luminance monitoring stop instruction to the sensor control module. Upon receiving the luminance monitoring stop instruction, the sensor control module may invoke the third interface to generate the second instruction, and then invoke the second interface to send the second instruction to the camera service module. The third interface may be a DeActive interface, and the DeActive interface is used to disable the ambient light detection function of the front-facing camera. The second instruction may be a Close Camera instruction, including a first identifier, a first package name, and the like.

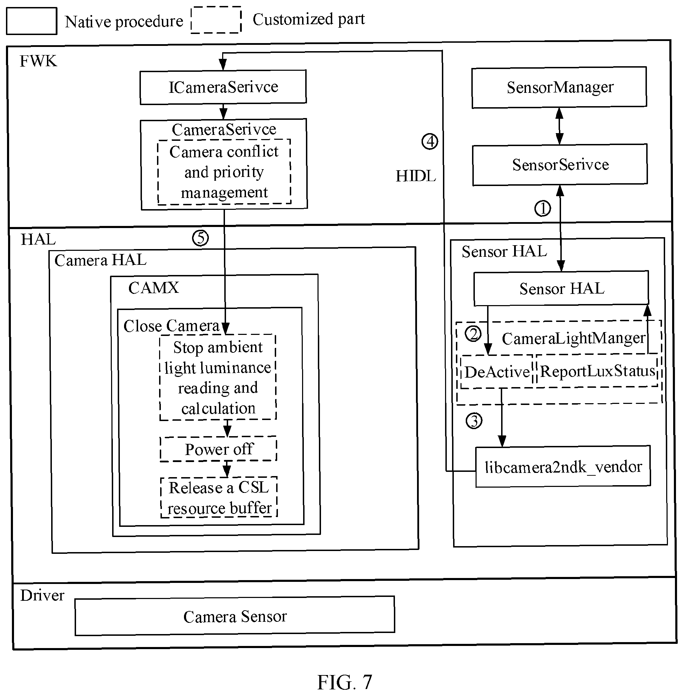

Optionally, this step may be corresponding to ①②③④ in FIG. 7, and specifically includes: SensorManager receives the screen-off message of the electronic device, generates the luminance monitoring stop instruction, and invokes SensorSerivce to send the luminance monitoring stop instruction to Sensor HAL. Sensor HAL invokes the DeActive interface of CameraLightManager to generate the Close Camera instruction, where the Close Camera instruction includes Camera Id=4 and a package name of an ambient light detection application; and then invokes libcamera2ndk_vendor to send the Close Camera instruction to CameraSerivce at an FWK layer.

602. After receiving the second instruction, the camera service module invokes a second function in a camera control module, and executes the second function based on the first identifier, to control a camera driver to disable a read thread, and power off the front-facing camera.

After receiving the second instruction, the camera service module invokes the second function in the camera control module, executes the second function based on the first identifier, and may generate a corresponding disable instruction by executing the second function, and send the generated disable instruction to the camera driver. Based on the disable instruction, the camera driver disables the read thread, stops reading ambient light luminance, powers off the front-facing camera, and then releases a CSL buffer resource applied for the front-facing camera. Further, after the camera driver disables the read thread, the camera control process stops sending second ambient light luminance to the sensor control module by using a data callback function.

Logic code for disabling the ambient light detection function of the front-facing camera may be:

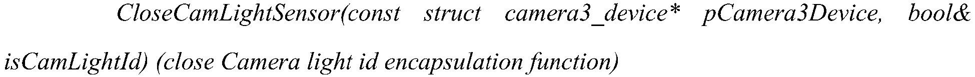

Optionally, this step may be corresponding to ⑤ in FIG. 7, and specifically includes: CameraSerivce invokes a Close Camera function in CAMX of Camera HAL based on a Close Camera instruction, and controls, by executing the Close Camera function, the camera driver to disable an asynchronous read thread, stop reading the ambient light luminance, power off the front-facing camera, and release the CSL buffer resource applied for the front-facing camera.

A front-facing camera and a rear-facing camera are usually configured on the electronic device. The front-facing camera supports an image output mode and an ambient light detection mode. The image output mode corresponds to a photographing function, a face unlock function, and the like of the front-facing camera. In the image output mode, the front-facing camera needs to capture an image to meet a use requirement of the user. Different from the image output mode, in the ambient light detection mode, display luminance is adjusted based on ambient light luminance output by the front-facing camera to improve a use requirement of the user, and the user requirement is lower than that in the image output mode. In actual application, the front-facing camera and the rear-facing camera cannot be enabled at the same time, and the image output mode and the ambient light detection mode of the front-facing camera cannot be enabled at the same time. To resolve a problem of camera enabling priorities, in this embodiment of this application, a corresponding identifier is set for each camera in the electronic device, each identifier is corresponding to one logical function of the camera, conflict determining logic for the identifier of the camera is set, and different priorities are configured for different package names, so that priorities of different identifiers may be determined based on the package name priorities.

Specifically, a process of configuring the corresponding identifier for the camera in the electronic device may include: In a process of powering on the electronic device, the camera control module interacts with the camera driver to obtain a type and a function of the camera in the electronic device, then abstracts a plurality of logical cameras based on the type and the function of the camera, and sets a corresponding identifier for each logical camera. For example, an identifier that is set for the photographing function of the front-facing camera is CameraID=1, and an identifier that is set for the ambient light detection function of the front-facing camera is CameraID=4.

For a process of setting the identifier for the ambient light detection function of the front-facing camera, refer to the following code:

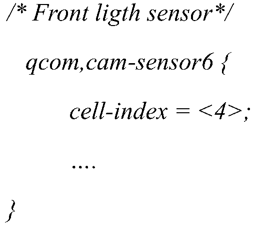

CameraID=1 and CameraID=4 are used as examples. Conflict determining logic configured in the camera control module is:

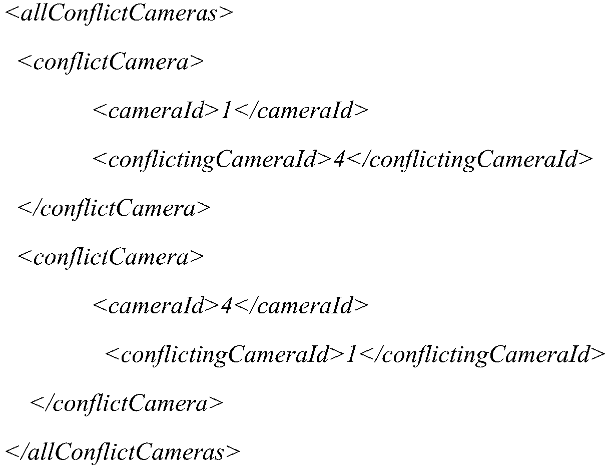

To ensure normal use of the user, in this embodiment of this application, a lowest priority may be configured for a package name of an ambient light detection application, so that when the user wants to start a camera application for photographing, a photographing service can be provided for the user. For ease of subsequent application, the camera control module may store the set identifier of the camera and priorities of different package names. Further, the camera control module may send the set identifier of the camera and the priorities of different package names to the camera service module for storage, so that the camera service module can manage camera enabling priorities.

In this embodiment of this application, management logic of the camera service module for the camera enabling priorities may be as follows: A target instruction is received, where the target instruction includes a target identifier and a target package name. After receiving the target instruction, the camera service module queries a camera list, where the camera list is used to store an identifier corresponding to a currently enabled camera. When the camera list is empty, it may be determined that the camera does not have an enable conflict, and further, a camera function corresponding to the target identifier is enabled based on the target instruction. When the camera list is non-empty, it may be determined that the camera has an enable conflict, that is, there is a camera being enabled currently, and further, priorities of the target identifier and an identifier corresponding to the camera being enabled currently may be determined based on the target package name and a package name of the camera being enabled currently. When the priority of the target identifier is lower than the priority of the camera being enabled currently, a camera function corresponding to the target identifier is no longer enabled. When the priority of the target identifier is higher than the priority of the camera being enabled currently, the camera being enabled currently is disabled, and then a camera function corresponding to the target identifier is enabled.

For the foregoing determining logic, refer to the following code: 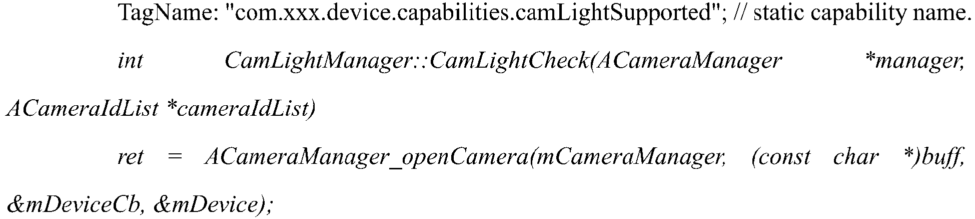 where *ACameraManager_openCamera* is an interface function of Open Camera, and buff is PackageName.

Based on the foregoing determining logic, before step 405 in FIG. 4 is performed, the camera service module may query the camera list, and perform step 405 when the camera list is empty.

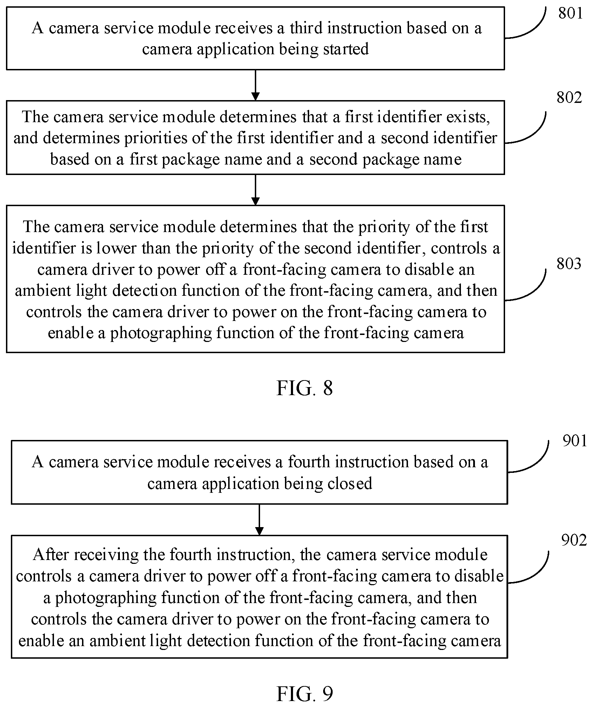

Referring to FIG. 8, an embodiment of this application provides a camera enabling priority management method. An example in which the electronic device 100 having the software system shown in FIG. 2 performs the method is used. There is a time sequence relationship between the method and the display luminance adjustment method shown in FIG. 4, and the method may be performed after step 405 in FIG. 4. Referring to FIG. 8, a procedure of the method provided in this embodiment of this application includes the following steps.

801. A camera service module receives a third instruction based on a camera application being started.

The third instruction includes a second identifier and a second package name. The second identifier is corresponding to a photographing function of a front-facing camera, and the second package name is a package name of the camera application.

802. The camera service module determines that a first identifier exists, and determines priorities of the first identifier and the second identifier based on a first package name and the second package name.

It may be learned from the embodiment shown in FIG. 4 that when the third instruction is received, the electronic device adjusts display luminance by using ambient light luminance detected by the front-facing camera. In this case, an ambient light detection function of the front-facing camera is enabled. After receiving the third instruction, the camera service module queries a camera list to obtain the first identifier, and further determines the priorities of the first identifier and the second identifier based on the first package name and the second package name.

803. The camera service module determines that the priority of the first identifier is lower than the priority of the second identifier, controls a camera driver to power off the front-facing camera to disable the ambient light detection function of the front-facing camera, and then controls the camera driver to power on the front-facing camera to enable the photographing function of the front-facing camera.

In this embodiment of this application, a priority of the first package name is lower than a priority of the second package name. Therefore, it may be determined that the priority of the first identifier is lower than the priority of the second identifier. Based on the priority of the first identifier being lower than the priority of the second identifier, the camera service module controls the camera driver to power off the front-facing camera to disable the ambient light detection function of the front-facing camera. Specifically, the camera service module invokes a second function in a camera control module, and executes a second function based on the first identifier, to control the camera driver to disable a read thread, stop reading ambient light luminance, power off the front-facing camera, and then release a CSL buffer resource applied for the front-facing camera. After the foregoing operation is performed, the ambient light detection function of the front-facing camera is disabled.

Optionally, after the ambient light detection function of the front-facing camera is disabled, the camera service module further sends a notification message to a sensor control module, to notify the sensor control module that the ambient light detection function of the front-facing camera is disabled. After receiving the notification message, the sensor control module does not attempt to enable the ambient light detection function of the front-facing camera until a notification message sent by the camera control module for notifying that the front-facing camera is closed is received.

Optionally, after the ambient light detection function of the front-facing camera is disabled, the sensor control module may perform a subsequent operation based on whether second ambient light luminance returned by a data callback function is received when the ambient light detection function of the front-facing camera is disabled. In a possible implementation, when the ambient light detection function of the front-facing camera is disabled, if the sensor control module receives the second ambient light luminance returned by the data callback function, the sensor service module reports the received second ambient light luminance to a sensor service module, so that the sensor service module can adjust luminance of a display based on the second ambient light luminance until a screen of the electronic device is turned off or second ambient light luminance returned by the data callback function is received again. Optionally, if the screen of the electronic device is turned off, the received second ambient light luminance is cleared. In another possible implementation, when the ambient light detection function of the front-facing camera is disabled, if the sensor control module does not receive the second ambient light luminance returned by the data callback function, preset ambient light luminance is reported to a sensor service module until a screen of the electronic device is turned off or the second ambient light luminance returned by the data callback function is received.

Further, after the ambient light detection function of the front-facing camera is disabled, the camera service module invokes a first function in the camera control module, and executes the first function based on the second identifier, to control the camera driver to apply for a CSL resource for the front-facing camera, power on the front-facing camera, initialize a camera register, configure an image output resource for the front-facing camera, and the like. After the foregoing operation is performed, the photographing function of the front-facing camera is enabled, and the electronic device captures an image by using the front-facing camera, and displays an interface of the camera application, to display the image captured by the front-facing camera on the interface of the camera application.

According to the method provided in this embodiment of this application, after the ambient light detection function of the front-facing camera is enabled, when the user needs to perform photographing by using the front-facing camera, the ambient light detection function of the front-facing camera can be disabled, and an image captured by the front-facing camera can be displayed, to meet a photographing requirement of the user.

Two points need to be described herein. First, the embodiment shown in FIG. 8 is described by using an example in which the user starts the camera application and performs photographing based on the front-facing camera. If the user starts the camera application and performs photographing by using a rear-facing camera, the procedure shown in FIG. 8 may also be performed. A difference lies in that, after the ambient light detection function of the front-facing camera is disabled, a photographing function of the rear-facing camera is enabled.

Second, the foregoing embodiment shown in FIG. 8 uses an example in which the user starts the camera application. If the user starts another application that needs to invoke the camera, the procedure shown in FIG. 8 may also be performed. Details are not described herein.

After the camera application is started, because the priority of the first identifier corresponding to the ambient light detection function of the front-facing camera is relatively low, the ambient light detection function of the front-facing camera is disabled, and the photographing function of the front-facing camera is enabled. After the camera application is disabled, the ambient light detection function of the front-facing camera may be enabled to adjust the luminance of the display. For this scenario, an embodiment of this application provides a camera enabling priority management method. The method has a time sequence relationship with the embodiment shown in FIG. 8, and may be performed after step 803. An example in which the electronic device 100 having the software system shown in FIG. 2 performs the method is used. Referring to FIG. 9, a procedure of the method provided in this embodiment of this application includes the following steps.

901. A camera service module receives a fourth instruction based on a camera application being closed.

The fourth instruction is used to disable a photographing function of a front-facing camera, and the fourth instruction includes a second identifier and a second package name.

902. After receiving the fourth instruction, the camera service module controls a camera driver to power off the front-facing camera to disable the photographing function of the front-facing camera, and then controls the camera driver to power on the front-facing camera to enable an ambient light detection function of the front-facing camera.

After receiving the fourth instruction, the camera service module invokes a second function in a camera control module, and executes the second function based on the second identifier, to control the camera driver to power off the front-facing camera, and then release a CSL buffer resource and an image output resource applied for the front-facing camera. After the foregoing operation is performed, the photographing function of the front-facing camera is disabled.

Optionally, after the photographing function of the front-facing camera is disabled, the camera control module may further send a notification message to a sensor control module, where the notification message is used to notify the sensor control module that the front-facing camera is closed, and the ambient light detection function of the front-facing camera may be enabled. The notification message may include a status field of the front-facing camera, and the like. The status field may be CAMERA_FRONT_CLOSE.

Further, after the photographing function of the front-facing camera is disabled, the camera service module invokes a first function in the camera control module, and executes the first function based on a first identifier, to control the camera driver to apply for a CSL resource for the front-facing camera, power on the front-facing camera, initialize a camera register, create a read thread for ambient light luminance, and the like. After the foregoing operation is completed, the ambient light detection function of the front-facing camera is enabled, and the electronic device detects ambient light luminance by using the front-facing camera, to adjust display luminance of the electronic device based on the ambient light luminance detected by the front-facing camera.

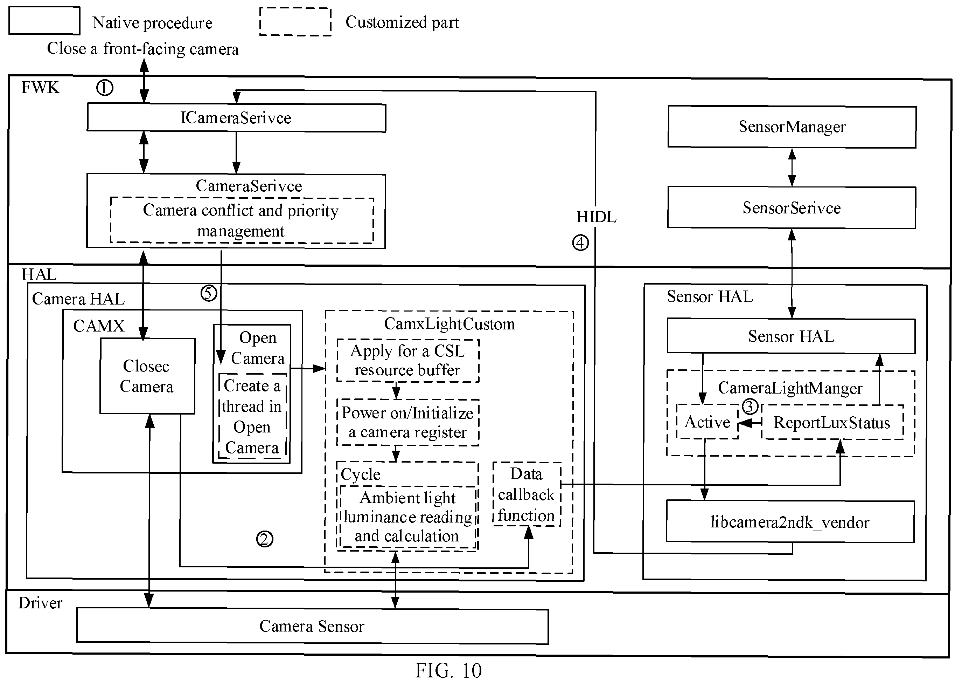

For this scenario, refer to FIG. 10. After the camera application is closed, CameraSerivce receives the fourth instruction, and after receiving the fourth instruction, CameraSerivce invokes a Close Camera function in CAMX of Camera HAL to perform a procedure of disabling CameraID=1. When the procedure for CameraID=1 is completed, Camera HAL sends a notification message to SensorHAL by using a data callback function, where the notification message carries CAMERA_FRONT_CLOSE or the like, and the notification message is used to notify SensorHAL that the front-facing camera is closed. When the notification message is received, SensorHAL creates a read thread, invokes an Active interface, and sends a first instruction to CameraSerivce at an FWK layer by using a libcamera2ndk_vendor interface, to enable the ambient light detection function of the front-facing camera, so that the ambient light detection function can be automatically enabled after the front-facing camera is closed in a screen-on state.

According to the method provided in this embodiment of this application, after the ambient light detection function of the front-facing camera is disabled, the ambient light detection function of the front-facing camera can be automatically enabled, so that the luminance of the display is automatically adjusted.

It should be noted that the embodiment shown in FIG. 9 is described by using an example in which a user starts the camera application, performs photographing based on the front-facing camera, and then closes the corresponding application. If the user starts the camera application, performs photographing by using a rear-facing camera, and closes the rear-facing camera, the procedure shown in FIG. 9 may also be performed. A difference lies in that, after the photographing function of the rear-facing camera is disabled, the ambient light detection function of the front-facing camera is enabled. Alternatively, after another application (for example, a face unlock application) that invokes the front-facing camera is closed, the procedure shown in FIG. 9 may also be performed. A difference lies in that, after another function of the front-facing camera is disabled, the ambient light detection function of the front-facing camera is enabled.

It may be learned from the embodiment shown in FIG. 3 that, after the screen of the electronic device is turned on, the ambient light detection application and the face unlock application (or the camera application) may be started at the same time, and an ambient light detection procedure and a face unlock (or photographing) procedure may be executed at the same time. In this case, the ambient light detection procedure may reach the camera service module earlier than the face unlock (or photographing) procedure, or may reach the camera service module later than the face unlock (or photographing) procedure. For the two cases, with reference to the procedures shown in FIG. 8 and FIG. 9, it may be learned that a different sequence of performing the ambient light detection procedure and the face unlock (or photographing) procedure leads to a different subsequent processing procedure. The following separately describes two scenarios.

Scenario 1: The ambient light detection procedure is performed earlier than the face unlock (or photographing) procedure.

In this scenario, the ambient light detection function of the front-facing camera is performed earlier than the face unlock (or photographing) procedure. The camera service module first enables the ambient light detection function of the front-facing camera, disables the ambient light detection function of the front-facing camera, and then enables the face unlock (or photographing) function of the front-facing camera. When this process is specifically performed, reference may be made to FIG. 11 for description. Referring to FIG. 11, after the screen of the electronic device is turned on, SensorService sends a luminance monitoring instruction to SensorHAL. After receiving the luminance monitoring instruction, Sensor HAL invokes an Active interface, and then invokes a libcamera2ndk_vendor interface to send a first instruction to CameraSerivce at an FWK layer. The first instruction includes CameraID=4 and a package name of an ambient light detection application. When it is determined that no identifier exists in a camera list, CameraSerivce may invoke an Open Camera function in CAMX of Camera HAL and execute the Open Camera function based on CameraID=4, to control a camera driver to apply for a CLS buffer resource for the ambient light detection function of the front-facing camera corresponding to CameraID=4, power on the front-facing camera, initialize a camera register, and create an asynchronous read thread, so as to enable the ambient light detection function of the front-facing camera. In a process of enabling the ambient light detection function of the front-facing camera, CameraService receives a third instruction, where the third instruction includes CameraID=1 and a package name of a face unlock (or photographing) application. CameraService determines that CameraID=4 exists. Because the package name of the face unlock (or photographing) application has a higher priority than the package name of the ambient light detection application, it can be determined that a priority of CameraID=4 is lower than a priority of CameraID=1. Therefore, the ambient light detection function of the front-facing camera needs to be disabled. After the ambient light detection function of the front-facing camera is enabled, CameraService disables the ambient light detection function of the front-facing camera. Specifically, CameraSerivce may invoke a Close Camera function in CAMX of Camera HAL, execute the Close Camera function based on CameraID=4, and control the camera driver to stop reading ambient light luminance, power off the front-facing camera, and release a CLS buffer resource allocated for the ambient light detection function of the front-facing camera of CameraID=4. After the ambient light detection function of the front-facing camera is disabled, CameraService sends a notification message to SensorHAL, where the notification message carries an OnDeviceDisconnected field, and OnDeviceDisconnected is used to indicate that SensorHAL has disabled the ambient light detection function of the front-facing camera. After receiving the notification message, SensorHAL invokes an Active interface, and then invokes a libcamera2ndk_vendor interface to send a first instruction to CameraSerivce at the FWK layer. After receiving the first start instruction, CameraSerivce may invoke an Open Camera function in CAMX of Camera HAL and execute the Open Camera function based on CameraID=1, to control the camera driver to apply for a CLS buffer resource for the face unlock (or photographing) function of the front-facing camera corresponding to CameraID=1, power on the front-facing camera, initialize a camera register, configure an image output resource, and the like, so as to enable the face unlock (or photographing) function of the front-facing camera, and further perform a face unlock (or photographing) operation.

Scenario 2: The ambient light detection procedure is performed earlier than the face unlock (or photographing) procedure.

In this scenario, the ambient light detection function of the front-facing camera is performed later than the face unlock (or photographing) procedure. The camera service module first enables the face unlock (or photographing) function of the front-facing camera, then disables the face unlock (or photographing) function, and enables the ambient light detection function of the front-facing camera. When this process is specifically performed, reference may be made to FIG. 12 for description. Referring to FIG. 12, after the screen of the electronic device is turned on, CameraService receives a third instruction. The third instruction includes CameraID=1 and a package name of the face unlock (or photographing) application. When it is determined that no identifier exists in a camera list, CameraSerivce may invoke an Open Camera function in CAMX of Camera HAL and execute the Open Camera function based on CameraID=1, to control the camera driver to apply for a CLS buffer resource for the face unlock (or photographing) function of the front-facing camera corresponding to CameraID=1, power on the front-facing camera, initialize a camera register, configure an image output resource, and the like, so as to enable the face unlock (or photographing) function of the front-facing camera. In a process of enabling the ambient light detection function of the front-facing camera, CameraService receives a first instruction, where the first instruction includes CameraID=4 and a package name of an ambient light detection application. CameraService determines that CameraID=1 exists. Because the package name of the face unlock (or photographing) application has a higher priority than the package name of the ambient light detection application, it can be determined that a priority of CameraID=4 is lower than a priority of CameraID=1. Therefore, CameraService does not enable the ambient light detection function of the front-facing camera, and then returns a notification message indicating that the ambient light detection function fails to be enabled to SensorHAL. The notification message carries a CAMERA_IN_USE field. Based on the notification message, SensorHAL determines that another function with a higher priority is being enabled, and no longer repeatedly enables CameraID=4, to reduce resource consumption of the electronic device. Because the ambient light detection function fails to be enabled, SensorHAL does not receive ambient light luminance returned by a data callback function, and therefore reports preset ambient light luminance to SensorService, so that SensorService can adjust the luminance of the display based on the preset ambient light luminance. After the face unlock (or photographing) function is disabled, CameraService enables the ambient light detection function of the front-facing camera. For this process, refer to the process shown in FIG. 10. Details are not described herein again.

In this embodiment of this application, when the electronic device is in a screen-on state, after the camera application is enabled, the ambient light detection function of the front-facing camera is not enabled, and after the camera application is closed, the ambient light detection function of the front-facing camera may be enabled. When the electronic device is in a screen-off state, the ambient light detection function of the front-facing camera is disabled. In a typical application scenario, after the camera application is started, the camera application is closed by turning off the display. Because the photographing function of the front-facing camera is disabled, the ambient light detection function of the front-facing camera can be enabled. When the display is turned off, the ambient light detection function of the front-facing camera should also be disabled. In a scenario in which the camera application is closed when the screen is turned off, an enabling procedure of the ambient light detection function and a disabling procedure of the ambient light detection function may be simultaneously instructed. In this case, the enabling procedure of the ambient light detection function may reach the sensor control module earlier than the disabling procedure of the ambient light detection function, or may reach the sensor control module later than the disabling procedure of the ambient light detection function. This embodiment of this application may be refined to two scenarios for description. One scenario is that the enabling procedure of the ambient light detection function is performed earlier than the disabling procedure of the ambient light detection function, and the other scenario is that the enabling procedure of the ambient light detection function is performed later than the disabling procedure of the ambient light detection function. Before this, to better manage the enabling procedure of the ambient light detection function and the disabling procedure of the ambient light detection function, a state lock State machine may be added to the sensor control module. The state lock is used to record a current state machine of the sensor control module. The state machine includes stateless, Active (used to enable the ambient light detection function), and DeActive (used to disable the ambient light detection function).

In a first scenario, the enabling procedure of the ambient light detection function is performed earlier than the disabling procedure of the ambient light detection function.

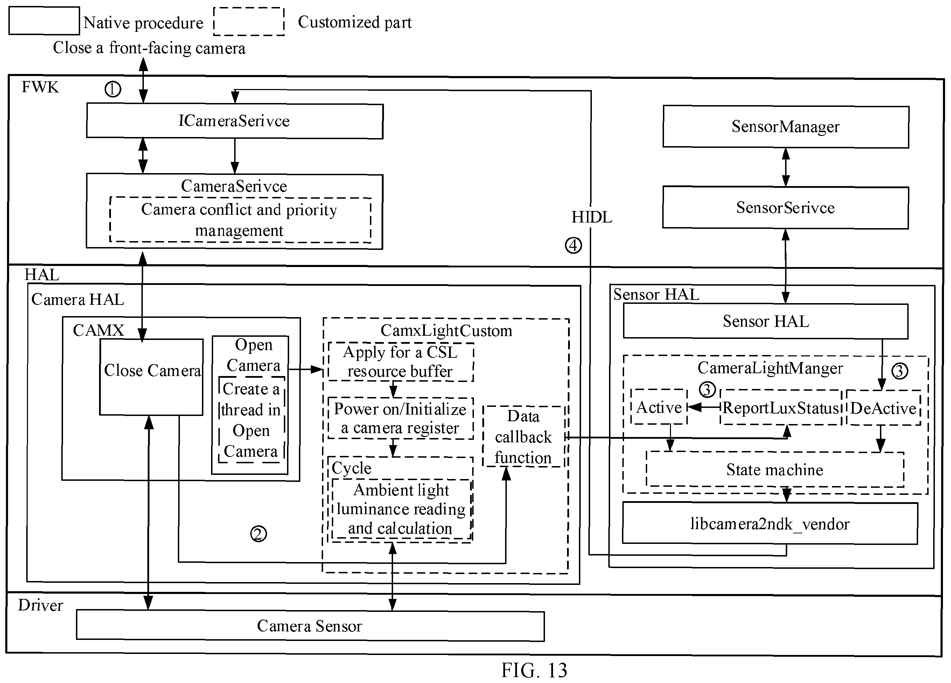

In this scenario, the ambient light detection function of the front-facing camera may be first enabled by performing steps 901 and 902, and then the ambient light detection function of the front-facing camera is disabled by performing step 601-step 602. For this scenario, refer to FIG. 13. After the camera application is started, when a touch operation on a power button is detected, the screen of the electronic device is turned off, and the front-facing camera is closed. CameraSerivce at the FWK layer receives a fourth instruction, and after receiving the fourth instruction, CameraSerivce invokes a Close Camera function in CAMX of Camera HAL and execute a procedure of disabling a function corresponding to CameraID=1. When the procedure of disabling the function corresponding to CameraID=1 is completed, Camera HAL sends a notification message to SensorHAL by using a data callback function, where the notification message carries a field of a CAMERA_FRONT_CLOSE state, to notify SensorHAL that the front-facing camera is closed. When the notification message is received, Sensor HAL creates an asynchronous thread and invokes an Active interface to query a state machine of SensorHAL in State machine. When a query result is stateless, the state machine of SensorHAL is recorded as Active, and then a libcamera2ndk_vendor interface is invoked to send a first instruction to CameraSerivce at the FWK layer, to enable the ambient light detection function of the front-facing camera. When Sensor HAL invokes Active to enable the function of CameraID=4, Sensor HAL receives a luminance monitoring stop instruction sent by SensorSerivce. After receiving the luminance monitoring stop instruction, Sensor HAL waits for enabling the ambient light detection function of the front-facing camera, and then invokes a DeActive interface to query the state machine of SensorHAL in State machine. When a query result is Active, a libcamera2ndk_vendor interface is invoked to send a second instruction to CameraSerivce at the FWK layer to disable the ambient light detection function of the front-facing camera.

In a second scenario, the enabling procedure of the ambient light detection function is performed later than the disabling procedure of the ambient light detection function.

In this scenario, after the ambient light detection function of the front-facing camera is disabled, the ambient light detection function of the front-facing camera does not need to be enabled again. That is, after performing step 902, the camera service module controls the camera driver to power off the front-facing camera, to disable the photographing function of the front-facing camera, and the procedure ends. For this scenario, refer to FIG. 13. After the camera application is started, when a touch operation on a power button is detected, the screen of the electronic device is turned off, and the front-facing camera is closed. When Sensor HAL receives a luminance monitoring stop instruction sent by SensorSerivce, based on the luminance monitoring stop instruction, Sensor HAL invokes a DeActive interface to record a state machine of SensorHAL as DeActive in State machine, and then invokes a libcamera2ndk_vendor interface to send a second instruction to CameraSerivce at the FWK layer, to disable the ambient light detection function of the front-facing camera. In a process in which Sensor HAL performs a DeActive operation on a function corresponding to CameraID=4, SensorHAL receives a notification message sent by Camera HAL by using a data callback function, where the notification message carries a field of a CAMERA_FRONT_CLOSE state. Based on the notification message, Sensor HAL creates an asynchronous thread, and invokes an Active interface to query a state machine of SensorHAL in State machine. When a query result is DeActive, Sensor HAL stops the Active operation, and does not enable the ambient light detection function of the front-facing camera.

In this embodiment of this application, for a client (a sensor control module) and a server (a camera control module) that are based on an AIDL service, an exception at the server may include two scenarios: One scenario is that a process at the server crashes when an ambient light detection function is enabled in a screen-on state, and the other scenario is that a process at the server crashes when an ambient light detection function is not enabled in a screen-off state. An exception at the client is mainly that the client crashes when an ambient light detection function is enabled in a screen-on state. For these three scenarios, the first death monitoring object and the second death monitoring object that are pre-registered in step 401 may be used for monitoring. The following separately provides descriptions.

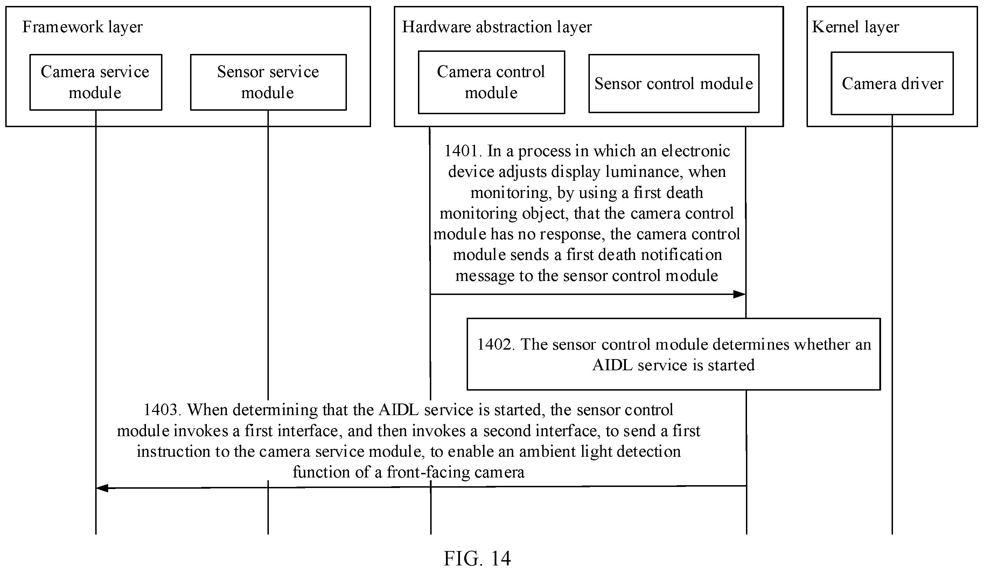

After the ambient light detection function of the front-facing camera is enabled in step 401 to step 405, in a process of adjusting luminance of the display based on step 406 to step 408, when the camera control module has no response, the first ambient light luminance output by the front-facing camera cannot be sent to the sensor control module. For a case in which the server is abnormal in a process of adjusting the luminance of the display by the electronic device, an embodiment of this application provides an ambient light detection function management method. An example in which the electronic device 100 having the software structure shown in FIG. 2 performs this embodiment of this application is used. Referring to FIG. 14, the method may be performed after step 405, and a procedure of the method provided in this embodiment of this application includes the following steps.

1401. In a process in which the electronic device adjusts display luminance, when monitoring, by using a first death monitoring object, that a camera control module has no response, the camera control module sends a first death notification message to a sensor control module.

Optionally, this step may correspond to step ② in FIG. 15, and specifically includes: In a process in which the electronic device adjusts the display luminance, the first death monitoring object monitors Camera HAL in real time. When it is monitored that Camera HAL cannot send, to the sensor control module SensorHAL, first ambient light luminance output by a front-facing camera, Camera HAL may invoke a data callback function to send a first death notification message to SensorHAL. The data callback function may be the data callback function registered in step 401.

1402. The sensor control module determines whether an AIDL service is started.

1403. When determining that the AIDL service is started, the sensor control module invokes a first interface, and then invokes a second interface, to send a first instruction to a camera service module, to enable an ambient light detection function of the front-facing camera.

In this case, the camera service module cannot return ambient light luminance output by the front-facing camera, and therefore, a data callback function needs to be re-registered, to ensure that a data path between the camera control module and the sensor control module can transmit data. Enabling the ambient light detection function of the front-facing camera includes: The camera service module invokes a first function in the camera control module, and executes the first function based on a first identifier, to control a camera driver to apply for an ambient light detection CSL resource buffer for the front-facing camera, power on the front-facing camera, initialize a camera register, and create an asynchronous read thread.

Optionally, this step may be corresponding to steps ②-⑥ in FIG. 15, and specifically includes: When receiving the first death notification message, SensorHAL determines whether the AIDL service is started. When the AIDL service is started, an Active interface is invoked to register a data callback function, and then a libcamera2ndk_vendor interface is invoked to send a first instruction to CameraSerivce, where the first instruction includes CameraID=4 and a package name of an ambient light detection application. After the first instruction is received, CameraSerivce invokes an OpenCamera function in Camera HAL and executes the OpenCamera function based on CameraID=4, to control the camera driver to apply for a CLS resource buffer for CameraID=4, power on the front-facing camera, initialize a camera register, and create an asynchronous read thread. When reading the first ambient light luminance output by the front-facing camera, Camera HAL fills second ambient light luminance in the data callback function, and sends the second ambient light luminance to SensorHAL by using the data callback function, and SensorHAL reports the second ambient light luminance to SensorSerivce.

In another embodiment of this application, when the AIDL service is not started, whether the AIDL service is started needs to be determined again after preset duration.

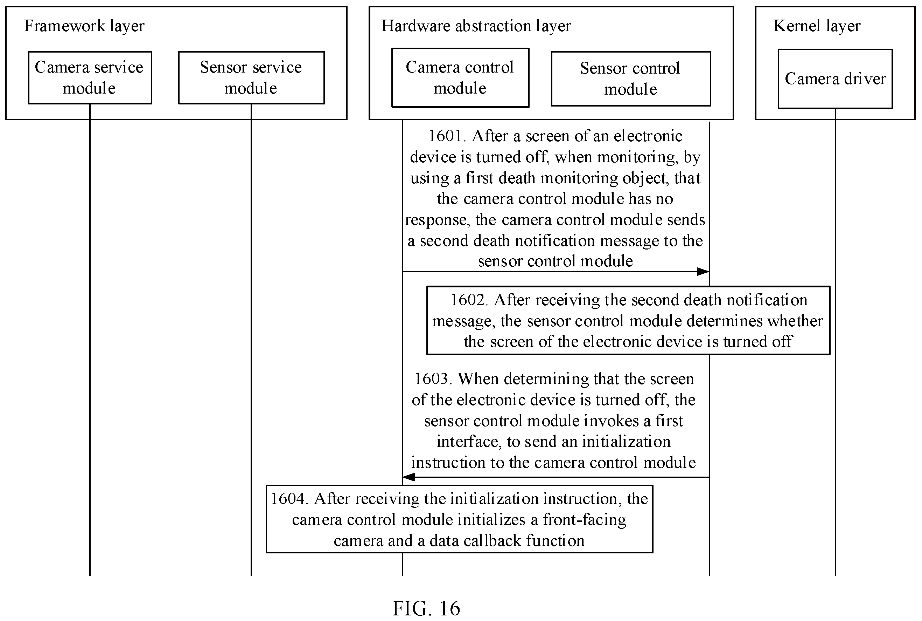

After the screen of the electronic device is turned off, and the foregoing step 601 and step 602 are performed, if the ambient light detection function of the front-facing camera cannot be normally disabled, for a case in which a server has no response after the screen of the electronic device is turned off, an embodiment of this application provides an ambient light detection function management method. An example in which the electronic device 100 having the software structure shown in FIG. 2 performs this embodiment of this application is used. Referring to FIG. 16, the method may be performed after step 602, and a procedure of the method provided in this embodiment of this application includes the following steps.

1601. After a screen of the electronic device is turned off, when monitoring, by using a first death monitoring object, that a camera control module has no response, the camera control module sends a second death notification message to a sensor control module.

Optionally, this step is corresponding to step ① in FIG. 16, and specifically includes: After the screen of the electronic device is turned off, the first death monitoring object detects that Camera HAL crashes, and an ambient light detection function of a front-facing camera cannot be normally disabled, and may invoke a data callback function to send a second death notification message to SensorHAL.

1602. After receiving the second death notification message, the sensor control module determines whether the screen of the electronic device is turned off.

1603. When determining that the screen of the electronic device is turned off, the sensor control module invokes a first interface, to send an initialization instruction to the camera control module.

1604. After receiving the initialization instruction, the camera control module initializes the front-facing camera and the data callback function.

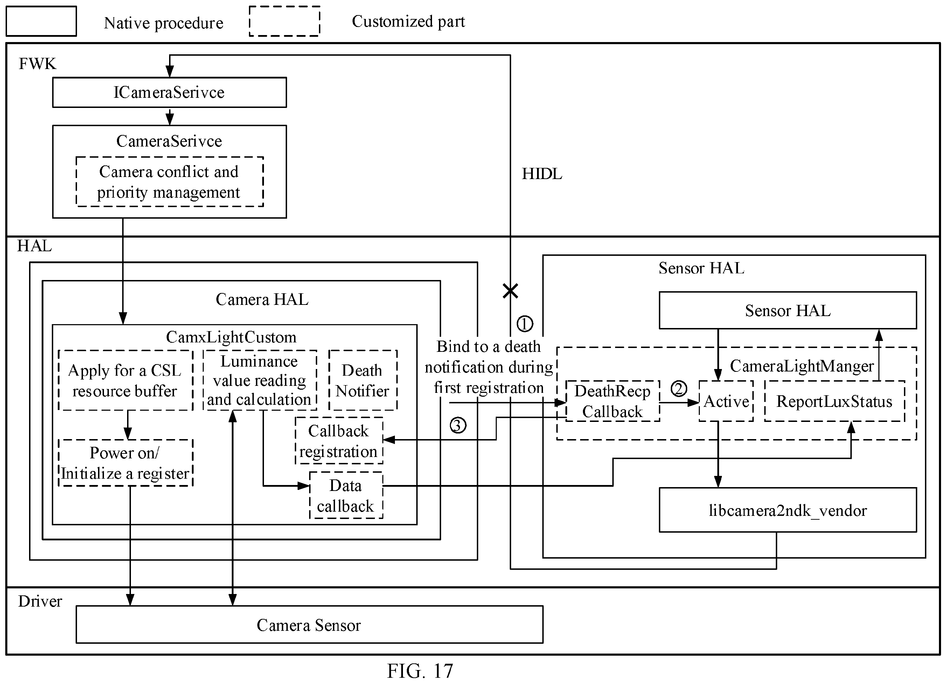

Optionally, this step is corresponding to steps ② and ③ in FIG. 17, and specifically includes: After the second death notification message is received, Sensor HAL may invoke an Active interface to initialize a camera register and a data callback function in Camera HAL.

In this scenario, because the display is off, it is unnecessary to adjust ambient light luminance. In this case, the sensor control module does not enable the front-facing camera.

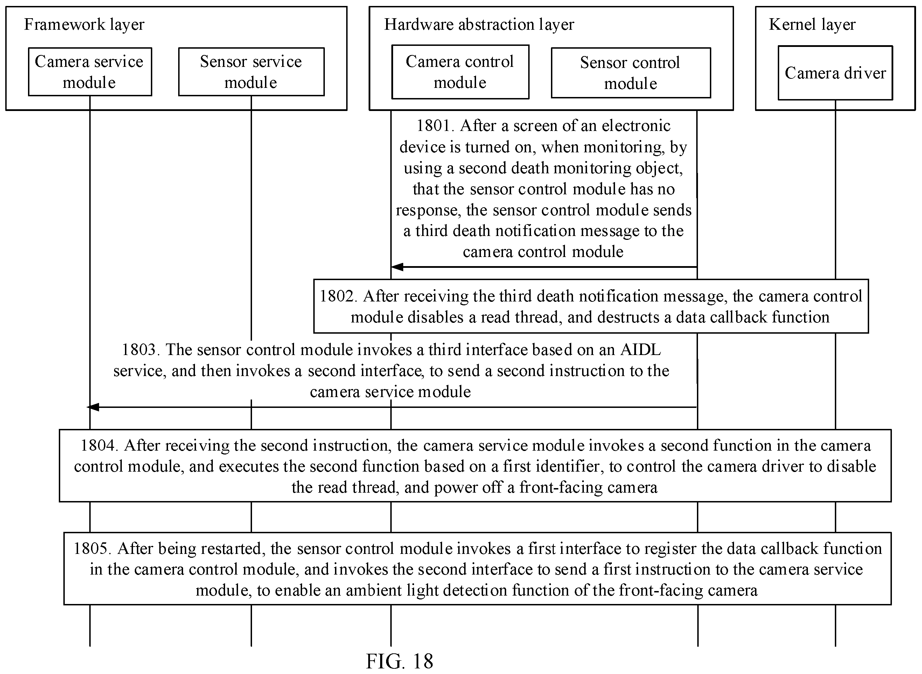

After the ambient light detection function of the front-facing camera is enabled by performing step 401 to step 405, in a process of adjusting luminance of the display based on step 406 to step 408, when the sensor control module cannot enable the ambient light detection function of the front-facing camera, for a case in which the server has no response in a process of adjusting the luminance of the display by the electronic device, an embodiment of this application provides an ambient light detection function management method. An example in which the electronic device having the software structure shown in FIG. 2 performs this embodiment of this application is used. Referring to FIG. 18, a procedure of the method provided in this embodiment of this application includes the following steps.

1801. After a screen of the electronic device is turned on, when monitoring, by using a second death monitoring object, that a sensor control module has no response, the sensor control module sends a third death notification message to a camera control module.

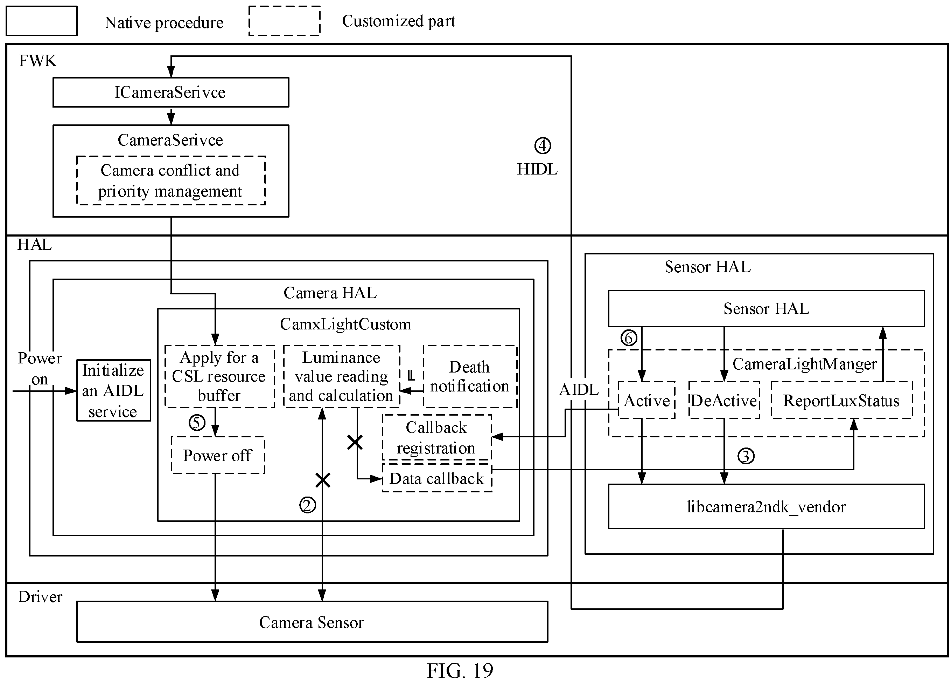

Optionally, this step is corresponding to step ① in FIG. 19, and specifically includes: After the screen of the electronic device is turned on, the second death monitoring object monitors SensorHAL in real time; and when a crash event of SensorHAL is detected, a data callback function is invoked to send the third death notification message to Camera HAL.

1802. After receiving the third death notification message, the camera control module disables a read thread, and destructs the data callback function.

Optionally, this step is corresponding to step ② in FIG. 19, and specifically includes: After the third death notification message is received, Camera HAL controls a camera driver to disable an asynchronous read thread, stop reading ambient light luminance, and destruct the data callback function.

1803. The sensor control module invokes a third interface based on an AIDL service, and then invokes a second interface, to send a second instruction to a camera service module.

Optionally, this step is corresponding to steps ③ and ④ in FIG. 19, and specifically includes: SensorHAL invokes a DeActive interface, and then invokes a libcamera2ndk_vendor interface to send a second instruction to CameraSerivce, where the second instruction includes CameraID=4 and a package name of an ambient light detection application.

1804. After receiving the second instruction, the camera service module invokes a second function in the camera control module, and executes the second function based on a first identifier, to control a camera driver to disable a read thread, and power off the front-facing camera.

Optionally, this step is corresponding to step ⑤ in FIG. 19, and specifically includes: After the second instruction is received, CameraSerivce invokes Camera HAL to control the camera driver to release a CSL resource applied for a function of CameraID=4, and power off the front-facing camera.

1805. After being restarted, the sensor control module invokes a first interface to register the data callback function in the camera control module, and invokes the second interface to send a first instruction to the camera service module, to enable the ambient light detection function of the front-facing camera.

Optionally, this step is corresponding to step ⑥ in FIG. 19, and specifically includes: SensorHAL invokes an Active interface, and then invokes a libcamera2ndk_vendor interface to send the first instruction to CameraSerivce, where the first instruction includes CameraID=4 and a package name of an ambient light detection application, to enable the ambient light detection function of the front-facing camera.

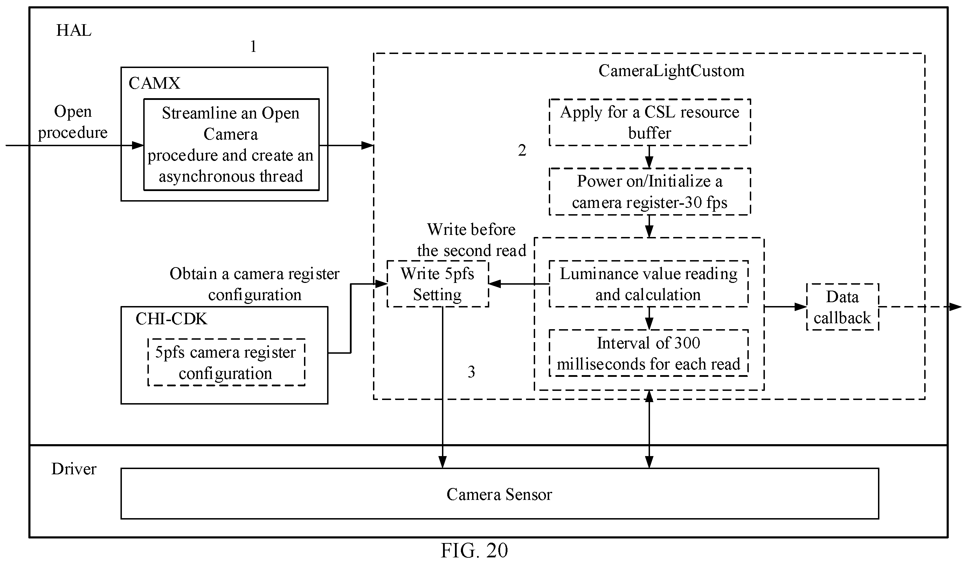

Generally, a camera software procedure is more complex than a physical ambient light software procedure, and has higher power consumption. Therefore, a power consumption requirement cannot be met when a performance requirement is met, and a performance requirement cannot be met when a power consumption requirement is met. Therefore, an embodiment of this application further optimizes the display luminance adjustment method in the foregoing embodiments, to ensure that a first frame of data can be reported in a timely and effective manner when a function is reduced. With reference to FIG. 20, the method mainly relates to the following three aspects in terms of power consumption reduction and performance optimization.

In a first aspect, a procedure of an OpenCamera function in CAMX is streamlined.

For the first aspect, in this embodiment of this application, customization processing is performed on the procedure of the original Open Camera function, to add a branch that skips image output and stream configuration. When CameraSerivce invokes the Open Camera function in Camera HAL, if the original Open Camera function supports enabling an ambient light detection function of a front-facing camera, an encapsulation function OpenCamLightSensor is invoked to skip an image output and stream configuration procedure, thereby reducing resource consumption when the front-facing camera is used as an ambient light detection component, and improving performance of an electronic device.

For an execution process of the streamlined OpenCamera function, the display luminance adjustment process during power-on shown in FIG. 4 is used as an example for description. In this embodiment of this application, the ambient light detection function of the front-facing camera needs to be enabled. When the front-facing camera does not support enabling the ambient light detection function of the front-facing camera, the ambient light detection function of the front-facing camera cannot be enabled by invoking a first function. Therefore, after the first function is invoked, a first subfunction in the first function is further invoked to determine whether the front-facing camera supports the ambient light detection function. When the front-facing camera supports the ambient light detection function, a second subfunction in the first function is invoked to control a camera driver to power on the front-facing camera, initialize a camera register, and create an asynchronous read thread. The image output and stream configuration procedure can be skipped by executing the streamlined OpenCamera function, so that enabling duration of the ambient light detection function is shortened, and performance of the electronic device is improved.

An ambient light detection determining function may be IsSupportCamLightSensor(), and an ambient light detection sensor function may be OpenCamLightSensor().

Code of the foregoing logic for determining whether the front-facing camera supports ambient light detection is: *static int open(const struct hw_module*_*t* pHwModuleAPI, const char* pCameraIdAPI,*

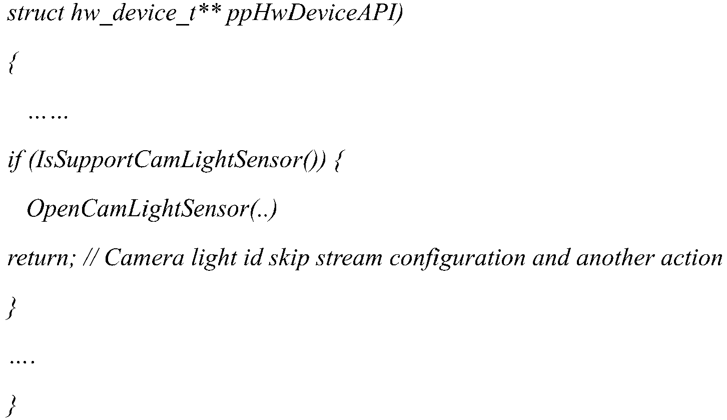

Certainly, when the front-facing camera does not support ambient light detection, interaction with the camera driver at a kernel layer may be performed, to control the camera driver to apply for a CSL resource buffer for the ambient light detection function of the front-facing camera, power on the front-facing camera, initialize a camera register, and configure a stream for the front-facing camera, so that the front-facing camera can output an image.

In a second aspect, a high priority is set for a read thread.

Considering that a plurality of threads may be executed at the same time in a camera driver, to ensure timely reporting of ambient light luminance, a relatively high priority may be set for an asynchronous thread. In this way, in a case of limited resources, execution of the read thread can be first ensured.

In a third aspect, a frequency is adaptively switched.

An electronic device has a relatively strict requirement on a first frame of data (a frame of data mentioned herein is not an image frame) of ambient light luminance. Generally, the data needs to be reported within 300 ms. There is no strict requirement on a second frame of data and a subsequent frame of data. Reporting duration of the first frame of data depends on a frame rate of a front-facing camera. To reduce power consumption, a frequency of the front-facing camera is set to a relatively low frequency. Because ambient light luminance needs integral time, data may not be reported within 300 millimeters. To ensure timely reporting of the first frame of data, an embodiment of this application provides an adaptive frequency switching method. The method records a target quantity of times, and writes the target quantity of times into a camera register. The target quantity of times may be a quantity of times that a camera control module reads ambient light luminance from the front-facing camera after a screen of the electronic device is turned on this time, or may be a quantity of times that a camera control module reads ambient light luminance from the front-facing camera after a screen of the electronic device is turned on last time. After the screen of the electronic device is turned off, the target quantity of times recorded in the camera register is cleared. After the front-facing camera is powered on, the camera control module obtains the target quantity of times from the camera register. When the target quantity of times is 0, the camera control module writes a first frequency into the camera register, and controls the front-facing camera to detect ambient light luminance based on the first frequency. When the target quantity of times is greater than 0, the camera control module writes a second frequency into the camera register, and controls the front-facing camera to detect ambient light luminance based on the second frequency, where the first frequency is greater than the second frequency. A first preset frame rate is higher than a second preset frame rate, the first preset frame rate may be 30 fps, and the second preset frame rate may be 5 fps or 3 fps.

The optimization method may be performed after step 405 and before step 406. Adaptive adjustment is performed on a frequency for collecting ambient light luminance by the front-facing camera, so that timely reporting of the first frame of data is ensured, and power consumption of the electronic device is reduced.

An embodiment of this application provides a computer-readable storage medium. The computer-readable storage medium stores at least one computer program, and the at least one computer program can implement the foregoing display luminance adjustment method when being executed by a processor.

An embodiment of this application provides a computer program product. The computer program product includes a computer program, and the computer program can implement the foregoing display luminance adjustment method when being executed by a processor.

It should be further noted that, the term "include", "comprise", or any other variant thereof is intended to cover non-exclusive inclusion, so that a process, method, commodity, or device that includes a series of elements includes not only those elements but also other elements that are not expressly listed, or includes elements inherent to such a process, method, commodity, or device. Without further limitation, the element defined by the sentence "including a" does not exclude that other identical elements also exist in the process, method, commodity, or device including the element.

The foregoing descriptions are merely embodiments of this application, and are not intended to limit this application. For a person skilled in the art, various modifications and changes may be made in this application. Any modification, equivalent replacement, and improvement made within the spirit and principle of this application shall be included in the scope of the claims of this application.

## Claims

1. A display luminance adjustment method, wherein the method comprises:
powering on, by an electronic device, a target camera after a screen is turned on;
detecting, by the electronic device, ambient light luminance by using the target camera;
adjusting, by the electronic device, display luminance based on the ambient light luminance detected by the target camera, wherein in a process in which the electronic device adjusts the display luminance, the target camera does not capture an image, and a camera application is not started;
starting, by the electronic device, the camera application in response to an operation of a user; and
after the camera application is started, capturing, by the electronic device, an image by using the target camera, and displaying an interface of the camera application, wherein the interface of the camera application comprises the image captured by the target camera.

2. The method according to claim 1, wherein the capturing, by the electronic device, an image by using the target camera comprises:
based on the camera application being started, powering off, by the electronic device, the target camera, and then powering on the target camera; and
obtaining, by the electronic device, the image captured by the target camera.

3. The method according to claim 1, wherein the method further comprises:
skipping adjusting, by the electronic device, the display luminance after the camera application is started.

4. The method according to claim 1, wherein the method further comprises:
closing, by the electronic device, the camera application in response to an operation of the user;
detecting, by the electronic device, ambient light luminance by using the target camera after the camera application is closed; and
adjusting, by the electronic device, the display luminance based on the ambient light luminance detected by the target camera, wherein in a process in which the electronic device adjusts the display luminance, the target camera does not capture an image.

5. The method according to claim 4, wherein the detecting, by the electronic device, ambient light luminance by using the target camera comprises:
based on the camera application being closed, powering off, by the electronic device, the target camera, and then powering on the target camera; and
obtaining, by the electronic device, the ambient light luminance detected by the target camera.

6. The method according to claim 1, wherein a software system of the electronic device comprises a framework layer, a hardware abstraction layer, and a kernel layer, the framework layer comprises a camera service module and a sensor service module, the hardware abstraction layer comprises a camera control module and a sensor control module, the kernel layer comprises a camera driver, and the powering on, by an electronic device, a target camera after a screen is turned on comprises:
sending, by the sensor service module, a luminance monitoring instruction to the sensor control module based on screen-on of the electronic device;
after receiving the luminance monitoring instruction, invoking, by the sensor control module, a first interface based on an AIDL service, and then invoking a second interface based on an HIDL service, to send a first instruction to the camera service module, wherein the first instruction comprises a first identifier, and the first identifier corresponds to an ambient light detection function of the target camera; and
after receiving the first instruction, invoking, by the camera service module, a first function in the camera control module, and executing the first function based on the first identifier, to control the camera driver to power on the target camera, initialize a camera register, and create a read thread for ambient light luminance.

7. The method according to claim 6, before the detecting, by the electronic device, ambient light luminance by using the target camera, further comprising:
obtaining, by the camera control module, a target quantity of times from the camera register after the target camera is powered on, wherein the target quantity of times is used to represent a quantity of times that the electronic device reads, after the screen is turned on, the ambient light luminance detected by the target camera; and
when the target quantity of times is 0, writing, by the camera control module, a first frequency into the camera register, and controlling the target camera to detect the ambient light luminance based on the first frequency; or
when the target quantity of times is greater than 0, writing, by the camera control module, a second frequency into the camera register, and controlling the target camera to detect the ambient light luminance based on the second frequency, wherein the first frequency is greater than the second frequency.

8. The method according to claim 6, wherein the adjusting, by the electronic device, display luminance based on the ambient light luminance detected by the target camera comprises:
obtaining, by the camera control module, first ambient light luminance output by the target camera, and sending second ambient light luminance to the sensor control module by using a data callback function, wherein the second ambient light luminance is generated based on the first ambient light luminance;
sending, by the sensor control module, the second ambient light luminance to the sensor service module; and
adjusting, by the sensor service module, the display luminance of the electronic device based on the second ambient light luminance.

9. The method according to claim 8, before the obtaining, by the camera control module, first ambient light luminance output by the target camera, and sending second ambient light luminance to the sensor control module by using a data callback function, further comprising:
based on power-on of the electronic device, after receiving the luminance monitoring instruction, invoking, by the sensor control module, the first interface, to register the data callback function in the camera control module.

10. The method according to claim 6, wherein the method further comprises:
after the screen of the electronic device is turned off, invoking, by the sensor control module, a third interface based on the AIDL service, and then invoking the second interface, to send a second instruction to the camera service module, wherein the second instruction comprises the first identifier; and
after receiving the second instruction, invoking, by the camera service module, a second function in the camera control module, and executing the second function based on the first identifier, to control the camera driver to disable the read thread, and power off the target camera.

11. The method according to claim 6, wherein the method further comprises:
in a process in which the electronic device adjusts the display luminance, sending, by the camera control module, a first death notification message to the sensor control module when monitoring, by using a first death monitoring object, that the camera control module has no response; and
after receiving the first death notification message, invoking, by the sensor control module, the first interface, and then invoking the second interface, to send the first instruction to the camera service module, to enable the ambient light detection function of the target camera.

12. The method according to claim 11, before the invoking, by the sensor control module, the first interface, and then invoking the second interface, to send the first instruction to the camera service module, further comprising:
determining, by the sensor control module, whether the AIDL service is started; and
when determining that the AIDL service is started, performing, by the sensor control module, an operation of invoking the first interface and then invoking the second interface to send a third instruction to the camera service module.

13. The method according to claim 6, wherein the method further comprises:
after the screen of the electronic device is turned off, sending, by the camera control module, a second death notification message to the sensor control module when monitoring, by using a first death monitoring object, that the camera control module has no response;
after receiving the second death notification message, invoking, by the sensor control module, the first interface, to send an initialization instruction to the camera control module; and
after receiving the initialization instruction, initializing, by the camera control module, the target camera and a data callback function, wherein the data callback function is used to send the ambient light luminance detected by the target camera to the sensor control module.

14. The method according to claim 13, before the invoking, by the sensor control module, the first interface, to send an initialization instruction to the camera control module, further comprising:
determining, by the sensor control module, whether the screen of the electronic device is turned off; and
when determining that the screen of the electronic device is turned off, performing, by the sensor control module, an operation of invoking the first interface to send the initialization instruction to the camera control module.

15. The method according to claim 6, wherein the method further comprises:
after the screen of the electronic device is turned on, sending, by the sensor control module, a third death notification message to the camera control module when monitoring, by using a second death monitoring object, that the sensor control module has no response;
after receiving the third death notification message, disabling, by the camera control module, the read thread, and destructing a data callback function, wherein the data callback function is used to send the ambient light luminance detected by the target camera to the sensor control module;
invoking, by the sensor control module, a third interface based on the AIDL service, and then invoking the second interface, to send a second instruction to the camera service module, wherein the second instruction comprises the first identifier;
after receiving the second instruction, invoking, by the camera service module, a second function in the camera control module, and executing the second function based on the first identifier, to control the camera driver to disable the read thread, and power off the target camera; and
after the sensor control module is restarted, invoking, by the sensor control module, the first interface to register the data callback function in the camera control module, and invoking the second interface to send the first instruction to the camera service module, to enable the ambient light detection function of the target camera.

16. The method according to claim 2, wherein a software system of the electronic device comprises a framework layer, a hardware abstraction layer, and a kernel layer, the framework layer comprises a camera service module and a sensor service module, the hardware abstraction layer comprises a camera control module and a sensor control module, the kernel layer comprises a camera driver, and the powering off, by the electronic device, the target camera, and then powering on the target camera, based on the camera application being started comprises:
receiving, by the camera service module, a third instruction based on the camera application being started, wherein the third instruction comprises a second identifier and a second package name, the second identifier corresponds to a photographing function of the target camera, and the second package name is a package name of the camera application;
determining, by the camera service module, that a first identifier exists, and determining priorities of the first identifier and the second identifier based on a first package name and the second package name, wherein the first identifier corresponds to an ambient light detection function of the target camera, and the first package name is a package name of an ambient light detection application; and
determining, by the camera service module, that the priority of the first identifier is lower than the priority of the second identifier, controlling the camera driver to power off the target camera to disable the ambient light detection function of the target camera, and then controlling the camera driver to power on the target camera to enable the photographing function of the target camera.

17. An electronic device, comprising a processor and a memory, wherein the memory stores at least one piece of program code; and the at least one piece of program code is invoked and executed by the processor, to implement the display luminance adjustment method according to any one of claims 1 to 16.

18. A computer-readable storage medium, wherein the computer-readable storage medium stores at least one computer program, and when the at least one computer program is executed by a processor, the display luminance adjustment method according to any one of claims 1 to 16 is implemented.

19. A computer program product, wherein the computer program product comprises a computer program, and when the computer program is executed by a processor, the display luminance adjustment method according to any one of claims 1 to 16 is implemented.
